# EUROPEAN PATENT APPLICATION

(11) **EP 4 757 359 A1**
(43) Date of publication of application: **10.06.2026**
(21) Application number: 24848149.1
(22) Date of filing: 26.07.2024
(51) Int. Cl.: H04W 4/50, H04W 4/06

(54) **AI SERVICE PROCESSING METHOD AND APPARATUS, DEVICE, AND READABLE STORAGE MEDIUM**

(30) Priority: 02.08.2023 CN 202310968329
(71) Applicant: Vivo Mobile Communication Co., Ltd., Dongguan, Guangdong 523863 (CN)
(72) Inventor: WANG, Hui, Dongguan, Guangdong 523863 (CN); KANG, Yanchao, Dongguan, Guangdong 523863 (CN)
(74) Representative: Lavoix
(86) International application number: PCT/CN2024/107678
(87) International publication number: WO 2025/026192

(57) **Abstract**

The present application discloses an AI service processing method and apparatus, a device, and a readable storage medium. The method includes: sending, by a terminal, a first message; and receiving, by the terminal, a second message, where the second message is used to respond to the first message. The first message is used to request allocation of a network resource for an AI service, and the second message includes indication information indicating an address of a first network element, where the first network element is an AI service processing entry network element; the first message is used to request allocation of an AI resource for an AI service, and the second message is used to indicate an AI resource establishment result; the first message is used to request modification of an AI resource for an AI service, and the second message is used to indicate an AI resource modification result; or the first message is used to request release of a network resource allocated for an AI service, and the second message is used to indicate a network resource release result.

## Description

### CROSS-REFERENCE TO RELATED APPLICATIONS

The present application claims priority to Chinese Patent Application No. 202310968329.6, filed in China on August 02, 2023, which is incorporated herein by reference in its entirety.

### TECHNICAL FIELD

The present application belongs to the field of communication technologies, and specifically relates to an artificial intelligence (Artificial Intelligence, AI) service processing method and apparatus, a device, and a readable storage medium.

### BACKGROUND

Artificial intelligence has entered the application era and can assist various industries in completing various tasks and providing multiple services. With the development of wireless mobile communication technologies, artificial intelligence (Artificial Intelligence, AI) will become one of the pillar technologies for future mobile communication technologies. The current fifth-generation mobile communication system only utilizes AI (for example, a network data analytics function (Network Data Analytics Function, NWDAF)) to perform some operation optimizations and does not provide AI as a general service to terminals. Moreover, operator networks can provide only data transmission channels with certain quality of service (transmission delay, packet error rate, or the like) guarantee, and such channels are currently only used for data transmission between terminals and target nodes and cannot be used for performing corresponding AI service processing, such as using trained models for rendering tasks or feeding back reconstructed environmental data to terminals in autonomous driving scenarios. How to implement AI services in operator networks is an urgent issue to be addressed.

### SUMMARY

Embodiments of the present application provide an AI service processing method and apparatus, a device, and a readable storage medium to address the issue of how to implement AI services in operator networks.

In a first aspect, an AI service processing method is provided, including:
sending, by a terminal, a first message; and
receiving, by the terminal, a second message, where the second message is used to respond to the first message; where
the first message is used to request allocation of a network resource for an AI service, and the second message includes indication information indicating an address of a first network element, where the first network element is an AI service processing entry network element;
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

In a second aspect, an AI service processing method is provided, including:
receiving, by a first network element, a first message; and
sending, by the first network element, a second message, where the second message is used to respond to the first message; where
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

In a third aspect, an AI service processing method is provided, including:
receiving, by a second network element, a first message, where the first message is used to request allocation of a network resource for an AI service; and
sending, by the second network element to a terminal, a second message in response to the first message, where the second message includes indication information indicating an address of a first network element, where the first network element is an AI service processing entry network element.

In a fourth aspect, an AI service processing apparatus is provided, including:
a first sending module, configured to send a first message; and
a first receiving module, configured to receive a second message, where the second message is used to respond to the first message; where
the first message is used to request allocation of a network resource for an AI service, and the second message includes indication information indicating an address of a first network element, where the first network element is an AI service processing entry network element;
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

In a fifth aspect, an AI service processing apparatus is provided, including:
a third receiving module, configured to receive a first message; and
a third sending module, configured to send a second message, where the second message is used to respond to the first message; where
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

In a sixth aspect, an AI service processing apparatus is provided, including:
a thirteenth receiving module, configured to receive a first message, where the first message is used to request allocation of a network resource for an AI service; and
a fourteenth sending module, configured to send to a terminal a second message in response to the first message, where the second message includes indication information indicating an address of a first network element, where the first network element is an AI service processing entry network element.

In an embodiment of the present application, the first message includes a third indication, where the third indication is used to indicate a network to establish a dedicated protocol data unit (Protocol Data Unit, PDU) session for an AI service.

In a seventh aspect, a terminal is provided, including: a processor, a memory, and a program or instructions stored on the memory and executable on the processor, where the program or instructions, when executed by the processor, implement the steps of the method as described in the first aspect.

In an eighth aspect, a network-side device is provided, including: a processor, a memory, and a program or instructions stored on the memory and executable on the processor, where the program or instructions, when executed by the processor, implement the steps of the method as described in the second aspect or the third aspect.

In a ninth aspect, a readable storage medium is provided, where a program or instructions are stored on the readable storage medium, and the program or instructions, when executed by a processor of a terminal, implement the steps of the method as described in the first aspect, or when executed by a processor of a network-side device, implements the steps of the method as described in the second aspect or the third aspect.

In a tenth aspect, a chip is provided, where the chip includes a processor and a communication interface, the communication interface is coupled to the processor, and the processor is configured to run a program or instructions to implement the steps of the method as described in the first aspect or the second aspect or the third aspect.

In an eleventh aspect, a computer program/program product is provided, where the computer program/program product is stored in a non-transitory storage medium, and the program/program product is executed by at least one processor to implement the steps of the method as described in the first aspect or the second aspect or the third aspect.

In a twelfth aspect, a communication system is provided, where the communication system includes a terminal and a network-side device, the terminal is configured to perform the steps of the method as described in the first aspect, and the network-side device is configured to perform the steps of the method as described in the second aspect or the third aspect.

In the embodiments of the present application, the terminal sends the first message; the terminal receives the second message in response to the first message, where the first message is used to request allocation of a network resource for an AI service, and the second message includes the indication information indicating the address of the first network element, where the first network element is an AI service processing entry network element for AI service management; the first message is used to request allocation of an AI resource for an AI service, and the second message is used to indicate the AI resource establishment result; the first message is used to request modification of an AI resource for an AI service, and the second message is used to indicate the AI resource modification result; or the first message is used to request release of a network resource allocated for an AI service, and the second message is used to indicate the network resource release result. Based on the request from the terminal, the network allocates a network resource, or allocates an AI resource, or modifies an AI resource, or releases a network resource for an AI service, so that the operator network can not only provide basic communication guarantees but also provide AI service processing functionalities.

### BRIEF DESCRIPTION OF DRAWINGS

FIG. 1 is a schematic diagram of an architecture of a wireless communication system according to an embodiment of the present application;
FIG. 2 is a first flowchart of an AI service processing method provided by an embodiment of the present application;
FIG. 3 is a second flowchart of an AI service processing method provided by an embodiment of the present application;
FIG. 4 is a third flowchart of an AI service processing method provided by an embodiment of the present application;
FIG. 5 is a fourth flowchart of an AI service processing method provided by an embodiment of the present application;
FIG. 6 is a fifth flowchart of an AI service processing method provided by an embodiment of the present application;
FIG. 7 is a sixth flowchart of an AI service processing method provided by an embodiment of the present application;
FIG. 8 is a first schematic diagram of an AI service processing apparatus provided by an embodiment of the present application;
FIG. 9 is a second schematic diagram of an AI service processing apparatus provided by an embodiment of the present application;
FIG. 10 is a third schematic diagram of an AI service processing apparatus provided by an embodiment of the present application;
FIG. 11 is a schematic diagram of a terminal provided by an embodiment of the present application;
FIG. 12 is a schematic diagram of a network-side device provided by an embodiment of the present application; and
FIG. 13 is a schematic diagram of a communication device provided by an embodiment of the present application.

### DETAILED DESCRIPTION OF EMBODIMENTS

The technical solutions in the embodiments of the present application will be clearly described below in conjunction with the drawings in the embodiments of the present application. Obviously, the described embodiments are part of the embodiments of the present application, rather than all of the embodiments. Based on the embodiments in the present application, all other embodiments obtained by those of ordinary skill in the art fall within the protection scope of the present application.

Terms "first", "second" and the like in the present application are used to distinguish similar objects and are not used to describe a specific order or sequence. It should be understood that the terms so used are interchangeable under appropriate circumstances so that the embodiments of the present application can be implemented in an order other than those illustrated or described herein, and the objects distinguished by "first" and "second" are generally of one type and the number of objects is not limited. For example, a first object may be one or may indicate more than one. In addition, "or" in the present application means at least one of the connected objects. For example, "A or B" covers three cases: including A but not B; including B but not A; and including both A and B. The character "/" generally indicates an "or" relationship between the associated objects before and after the character.

The term "indicate" in the present application may be a direct indication (or explicit indication) or an indirect indication (or implicit indication). A direct indication may be understood as a sender explicitly informing a receiver of specific information, an operation to be performed, a request result, and other content in a sent indication. An indirect indication may be understood as a receiver determining corresponding information according to an indication sent by a sender, or performing judgment and determining an operation to be performed, a request result, or the like according to a judgment result.

It should be noted that the technology described in the embodiments of the present application is not limited to long term evolution (Long Term Evolution, LTE)/LTE-advanced (LTE-Advanced, LTE-A) systems, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) and other systems. The terms "system" and "network" in the present application are often used interchangeably, and the described technologies may be used not only for the systems and radio technologies mentioned above, but also for other systems and radio technologies. The following description describes a new radio (New Radio, NR) system for exemplary purposes, and NR terminology is used in most of the following description, but these technologies may also be applied to systems other than NR systems, such as a 6^{th} generation (6^{th} Generation, 6G) communication system.

To facilitate understanding of the embodiments of the present application, the following technical points are first introduced:
1. IP multimedia subsystem (IP Multimedia Subsystem, IMS) data transmission.

In the 5th generation mobile communication technology system (5th Generation System, 5GS), IMS is a data network (Data Network, DN). A terminal connects to a user plane function (User Plane Function, UPF) through a base station and then enters an IMS core network through a proxy-call session control function (Proxy-CallSessionControlFunction, P-CSCF).

The terminal establishes a PDU session dedicated to the IMS network, with a data network name (Data Network Name, DNN) being the IMS network. When the terminal establishes the PDU session, a session management function (Session Management Function, SMF) discovers that it is IMS DNN, establishes the PDU session, and allocates a P-CSCF address and a default quality of service (Quality of Service, QoS) flow (flow) parameter to the terminal, because in 5GS, P-CSCF is an application server (Application Server, AS). When the terminal uses a service, according to a QoS requirement of the application layer, establishment of a dedicated QoS flow is dynamically triggered. That is, a PDU session modification procedure is triggered and a dedicated QoS flow parameter is delivered.

The terminal uses the default quality of service QoS flow to transmit IMS signaling, such as session initialization protocol (Session initialization Protocol, SIP) signaling, for negotiating some control parameters. The terminal uses a dedicated QoS flow to transmit IMS data, such as audio and media streams.

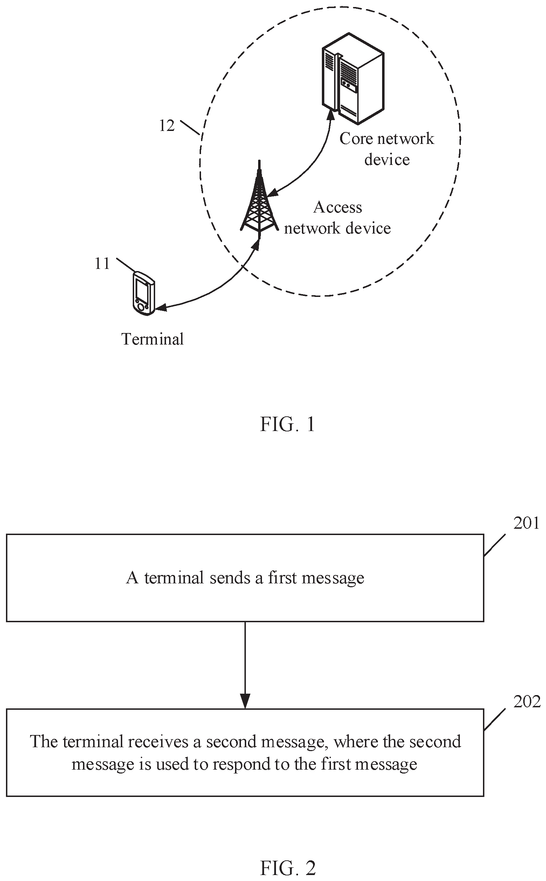

FIG. 1 is a block diagram of a wireless communication system to which embodiments of the present application can be applied. The wireless communication system includes a terminal 11 and a network-side device 12.

The terminal 11 may be a mobile phone, a tablet personal computer (Tablet Personal Computer), a laptop computer (Laptop Computer), a notebook computer, a personal digital assistant (Personal Digital Assistant, PDA), a palm computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), shipboard equipment, pedestrian user equipment (Pedestrian User Equipment, PUE), a smart home (a home device with wireless communication function, such as a refrigerator a television, a washing machine or furniture), a game console, a personal computer (Personal Computer, PC), a teller machine, a self-service machine, or other terminal-side devices. The wearable device includes a smart watch, a smart bracelet, a smart headset, smart glasses, smart jewelry (smart bracelet, smart bangle, smart ring, smart necklace, smart anklet, or smart ankle bracelet), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. In addition to the above terminal devices, the terminal involved in the present application may also be a chip in the terminal, such as a modem (Modem) chip or a system on chip (System on Chip, SoC). It should be noted that the specific type of the terminal 11 is not limited in the embodiments of the present application.

The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point (Access Point, AS), a wireless fidelity (Wireless Fidelity, WiFi) node, or the like. The base station may be referred to as a Node B (Node B, NB), an evolved Node B (evolved Node B, eNB), a next generation Node B (the next generation Node B, gNB), a new radio Node B (New Radio Node B, NR Node B), an access point, a relay station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (Home Node B, HNB), a home evolved Node B, a transmission reception point (Transmission Reception Point, TRP) or some other suitable term in the art. As long as the same technical effect is achieved, the base station is not limited to a specific technical term. It should be noted that in the embodiments of the present application, only the base station in the NR system is taken as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a policy charging function, a NAS interface function, a communication management function, an AI service management function, an AI management function, an AI resource management function, an AI model management function, an AI resource node, a communication resource node, and the like. It should be noted that in the embodiments of the present application, only the core network device in the NR system is taken as an example for introduction, and the specific type of the core network device is not limited.

An AI service processing method and apparatus, a communication device, and a readable storage medium provided by the embodiments of the present application will be described in detail below through some embodiments and their application scenarios in conjunction with the drawings.

Referring to FIG. 2, an embodiment of the present application provides an AI service processing method executed by a terminal, including the following specific steps: step 201 and step 202.

Step 201: The terminal sends a first message.

Step 201: The terminal receives a second message, where the second message is used to respond to the first message.

The first message (for example, a PDU session establishment request message) is used to request allocation of a network resource for an AI service, and the second message (for example, a PDU session establishment response message) includes indication information indicating an address of a first network element, where the first network element is an AI service processing entry network element used for AI service management. A network resource (or referred to as a service resource) includes a communication resource and an AI resource. It should be noted that a service resource is a general term for various resources that provide a reliable guarantee link for a certain service, including a communication resource, an AI resource, and a policy resource. A communication resource is set of communication service resources provided by the existing 3rd generation partnership project (3rd Generation Partnership Project, 3GPP) to terminals or third parties, including but not limited to communication links, allocated and scheduled frequency bands, memory of base stations or network elements, signaling forwarding, and the like. AI resources are a set of resources to guarantee AI services, including but not limited to computing capabilities of high-performance computing machines (central processing unit (Central Processing Unit, CPU)/graphics processing unit (Graphics Processing Unit, GPU), or the like), storage capabilities for large amounts of training data, and the like. Mapped to actual links, they can be understood as PDU sessions and AI sessions, the former belonging to sessions on the communication resource link, and the latter belonging to sessions on the AI resource link.

Alternatively, the first message (for example, an AI resource establishment request message) is used to request allocation of an AI resource for an AI service, and the second message (for example, an AI resource establishment response message) is used to indicate an AI resource establishment result, where the AI resource establishment result is used to indicate whether the AI resource establishment is successful or failed.

Alternatively, the first message (for example, an AI resource modification request message) is used to request modification of an AI resource for an AI service, and the second message (for example, an AI resource modification response message) is used to indicate an AI resource modification result, where the AI resource modification result is used to indicate whether the AI resource modification is successful or failed.

Alternatively, the first message (for example, an AI service release request message) is used to request release of a network resource allocated for an AI service, and the second message (for example, an AI service release response message) is used to indicate a network resource release result, where the AI resource release result is used to indicate whether the network resource release is successful or failed.

The first network element in this embodiment has AI service management functionalities, AI service identifier resolution, and the like. For example, the first network element can convert external AI service requests into internal AI resource management and/or communication resource management; the first network element can determine required AI resources considering AI service categories and/or QoS requirements of AI services. The first network element may also be referred to as an AI service management function, an external service management function, a service management function, a computing power service management function, or the like.

In an embodiment of the present application, the sending, by a terminal, a first message, where the first message is used to request allocation of a network resource for an AI service, includes:
sending, by the terminal, the first message according to a UE route selection policy (UE Route Selection Policy, URSP) rule, where the first message is used to request allocation of a network resource for an AI service; where
the URSP rule includes a first indication, and the first indication is used for the terminal to identify AI service traffic and route the AI service traffic to an existing PDU session or establish a new PDU session.

In an embodiment of the present application, the first indication includes at least one of the following: a data network name (Data Network Name, DNN) dedicated to an AI service, single network slice selection assistance information (Single Network Slice Selection Assistance Information, S-NSSAI) dedicated to an AI service, an AI service (AI service) identifier, an AI operating system identifier, and an AI application identifier.

In an embodiment of the present application, before the sending, by the terminal, the first message based on a URSP rule, the method further includes:
sending, by the terminal, a second indication, where the second indication is used to indicate at least one of the following: the terminal supports AI processing, the terminal supports an AI service, and the terminal supports a policy for an AI service; and
receiving, by the terminal, the URSP rule related to the second indication.

In an embodiment of the present application, the second indication is included in a UE policy classmark or a protocol configuration option (Protocol Configuration Option, PCO) information element (Information Element, IE) or an extended protocol configuration option (extended Protocol Configuration Option, ePCO) information element.

In an embodiment of the present application, in a case that the first message is used to request allocation of a network resource for an AI service, the first message includes a third indication, where the third indication is used to indicate a network to establish a dedicated PDU session for the AI service.

In an embodiment of the present application, in a case that the first message is used to request allocation of an AI resource for an AI service, the first message includes at least one of the following:
(1) AI service requirement information.

AI service requirement information is used to indicate an expected AI service quality requirement. Specifically, a user can subscribe to an AI service with an operator network, and the operator network allocates an AI service quality requirement to the user.

For example, the network side determines policy information (for example, a communication policy and a policy for an AI service) according to the AI service requirement information, and the network side allocates, according to the policy information, an AI resource satisfying the AI service requirement.

The communication policy includes but is not limited to a QoS rule corresponding to an existing PDU session, and the AI policy includes at least one of AI service processing delay, AI service processing accuracy, and the like.
(2) DNN.
(3) S-NSSAI.
(4) A fourth indication, where the fourth indication is used to indicate a session type.

For example, the fourth indication information indicates whether a session is a PDU session or an AI session.

(5) PDU session information.

The PDU session information is used to indicate the network to use a PDU session channel to transmit Al service data and allocate a corresponding communication resource.

Optionally, the PDU session information includes at least one of the following: a PDU session identifier, and a PDU session type.

(6) AI service policy information.

For example, the network side allocates, according to the AI service policy information, an AI resource satisfying an AI service requirement.

(7) An address of an application server.

For example, the network side can identify that a corresponding service is an AI service according to at least one of the above DNN, S-NSSAI, fourth indication, PDU session information, and application server address. In this embodiment, an application server can be used to perform external service processing. For example, the application server processes data forwarded by a resource node and provides feedback.

In an embodiment of the present application, in a case that the first message is used to request modification of an AI resource for an AI service, the first message includes at least one of the following:
(1) AI service requirement information;
(2) PDU session information;
(3) a fifth indication, where the fifth indication is used to indicate that completion of the AI service requires application server collaboration; and
(4) an address of an application server.

In an embodiment of the present application, the first message is used to request release of a network resource allocated for an AI service, and the first message includes at least one of the following:
(1) AI service requirement information.
(2) PDU session information.
(3) AI service policy information.
(4) Communication policy information.

For example, the communication policy information includes but is not limited to a communication policy identifier, where the communication policy includes but is not limited to a QoS rule corresponding to an existing PDU session, and optionally, the communication policy is used to establish a suitable dedicated bearer for the AI service.
(5) A DNN.
(6) An S-NSSAI.
(7) A sixth indication, where the sixth indication is used to indicate an AI service release cause.
(8) A seventh indication, where the seventh indication is used to indicate an AI service release type.

In an embodiment of the present application, the AI service requirement information includes at least one of the following:
(1) An AI service identifier.
   The AI service identifier is used to identify a requested AI service, and the network side determines, according to the service identifier, a specific AI service requested by UE, such as an environment reconstruction service, a face recognition service, or the like.
(2) An AI service type.
   The AI service type is used to indicate the type of the requested AI service, and the network side determines whether the UE requests a training service or an inference service according to it.
(3) An AI service quality of experience (Quality of Experience, QoE) requirement.
   The AI service QoE requirement is used to indicate quality of service expected by the terminal for the requested AI service, including at least one of response speed, reliability, satisfaction, and the like of the AI service.
(4) AI service QoS information.
   The AI service QoS information is used to indicate a network indicator required for the requested AI service, including at least one of priority, delay, packet loss rate, packet error rate, peak rate, and the like.
(5) Model-related parameters.

The model-related parameter is used to indicate the number of models required for the requested AI service, including at least one of model size, model training algorithm, model precision/accuracy, model manufacturer, model identifier, model function identifier, model architecture, weight parameter, and the like.

The model in the present application may also be referred to as an AI model, that is, the model-related parameter may also be referred to as an AI model-related parameter.

(6) An eighth indication, where the eighth indication is used to indicate whether intra-network data is needed.

For example, the eighth indication is used to indicate whether intra-network data needs to be obtained from a data source. Exemplarily, when the eighth indication is 1, it indicates that internal data is needed, and when the eighth indication is 0, it indicates that internal data is not needed.

(7) A ninth indication, where the ninth indication is used to indicate whether a data source is needed. Exemplarily, when the ninth indication is 1, it indicates that a data source is needed, and when the ninth indication is 0, it indicates that a data source is not needed.

In this embodiment, the data source generates, stores, and/or forwards data.

In an embodiment of the present application, the third indication is used to indicate a network to establish a dedicated PDU session for an AI service, including at least one of the following:
(1) the third indication is used to indicate the terminal to request the address of the first network element, where the third indication is included in an ePCO IE, and the ePCO IE is used to indicate a network to establish a dedicated PDU session for an AI service; and
(2) the third indication is used to indicate that the terminal supports AI service processing, where the third indication is included in a UE capability information element, and the UE capability information element is used to indicate a network to establish a dedicated PDU session for an AI service. For example, the UE capability information element may be a 5G session management capability (5GSM capability) information element.

In an embodiment of the present application, the indication information indicating the address of the first network element includes at least one of the following: the address of the first network element, and an address of an application server. In this embodiment, the application server can provide an AI service.

In an embodiment of the present application, the AI resource establishment result includes information about an AI resource node.

In this embodiment, the AI resource node is used for service processing and service policy rule implementation. For example, the AI resource node can perform computing processing of an AI service according to a command from an AI resource management function (user plane execution process); or update an AI resource status to the AI resource management function. The AI resource node may also be referred to as a resource node, a computing power resource node, or a service resource node.

In an embodiment of the present application, the AI resource modification result includes updated information about an AI resource node.

In an embodiment of the present application, the network resource release result includes a cause value for release failure.

In an embodiment of the present application, the information about an AI resource node includes at least one of the following: an IP address of the AI resource node, identifier information of the AI resource node, and a fully qualified domain name (Fully Qualified Domain Name, FQDN) of the AI resource node.

In an embodiment of the present application, after the receiving, by the terminal, a second message used to indicate an AI resource establishment result, the method further includes:
sending, by the terminal, AI service data to an AI resource node corresponding to the information about an AI resource node via a PDU session.

In an embodiment of the present application, the first message or the second message is included in at least one of the following: a session initialization protocol (Session Initiation Protocol, IP) message, a hypertext transfer protocol (Hypertext Transfer Protocol, HTTP) message, and a newly added protocol message, where the newly added protocol message is a protocol message newly defined for processing the AI service and used to transmit an AI-related message.

In this embodiment, based on the request from the terminal, the network allocates a network resource, or allocates an AI resource, or modifies an AI resource, or releases a network resource or AI resource for an AI service, so that the operator network can not only provide basic communication guarantees but also provide AI service processing functionalities.

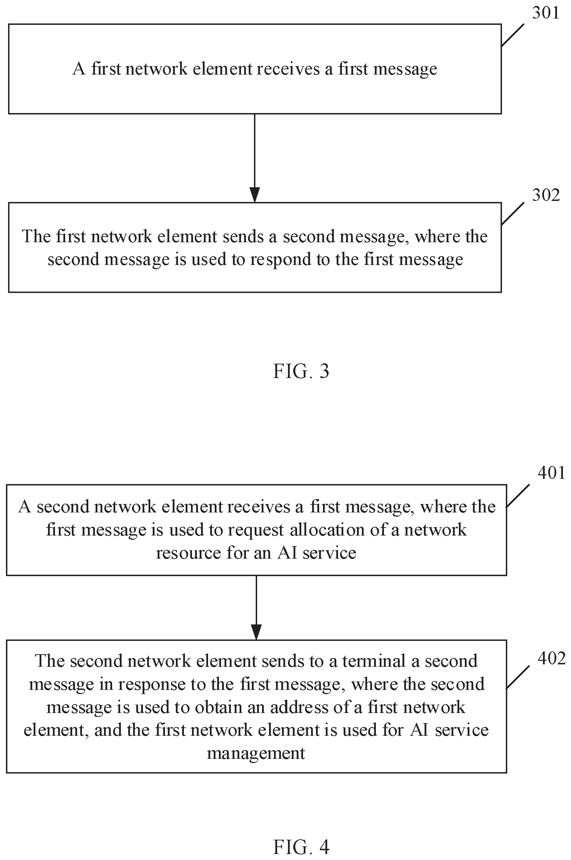

Referring to FIG. 3, an embodiment of the present application provides an AI service processing method executed by a first network element, including the following specific steps: step 301 and step 302.

Step 301: The first network element receives a first message.

Step 302: The first network element sends a second message, where the second message is used to respond to the first message.

The first message (for example, an AI resource establishment request message) is used to request allocation of an AI resource, and the second message (for example, an AI resource establishment response message) is used to indicate an AI resource establishment result;
the first message (for example, an AI resource modification request message) is used to request modification of an AI resource, and the second message (for example, an AI resource modification response message) is used to indicate an AI resource modification result; or
the first message (for example, an AI service release request message) is used to request release of a network resource allocated for an AI service, and the second message (for example, an AI service release response message) is used to indicate a network resource release result.

In an embodiment of the present application, in a case that the first message is used to request allocation of an AI resource for an AI service, the first message includes at least one of the following:
(1) AI service requirement information;
(2) a DNN;
(3) an S-NSSAI;
(4) a fourth indication, where the fourth indication is used to indicate a session type;
(5) PDU session information;
(6) AI service policy information; and
(7) an address of an application server.

In an embodiment of the present application, in a case that the first message is used to request modification of an AI resource for an AI service, the first message includes at least one of the following:
(1) AI service requirement information;
(2) PDU session information;
(3) a fifth indication, where the fifth indication is used to indicate that completion of an AI service requires application server collaboration; and
(4) an address of an application server.

In an embodiment of the present application, the first message is used to request release of a network resource allocated for an AI service, and the first message includes at least one of the following:
(1) AI service requirement information;
(2) PDU session information;
(3) AI service policy information;
(4) communication policy information;
(5) a DNN;
(6) an S-NSSAI;
(7) a sixth indication, where the sixth indication is used to indicate an AI service release cause; and
(8) a seventh indication, where the seventh indication is used to indicate an AI service release type.

In an embodiment of the present application, the AI resource establishment result includes information about an AI resource node.

In an embodiment of the present application, the AI resource modification result includes updated information about an AI resource node.

In an embodiment of the present application, the network resource release result includes a cause value for release failure.

In an embodiment of the present application, after the receiving, by a first network element, a first message used to request allocation of an AI resource, and before the sending, by the first network element, a second message used to indicate an AI resource establishment result, the method further includes:
sending, by the first network element, a third message (for example, an AI resource request message) to a third network element, where the third message is used to request the third network element to determine an AI resource node; and
receiving, by the first network element, a fourth message (for example, an AI resource response message) sent by the third network element in response to the third message, where the fourth message includes information about an AI resource node.

In this embodiment, the third network element is used for service resource management. For example, the third network element can perform allocation update and release of an AI or computing power resource on demand, or the third network element can also perform status update maintenance of an AI or computing power resource node on demand. The third network element may also be referred to as an AI resource management function, a resource management function, or a computing power resource management function.

In an embodiment of the present application, the third message includes at least one of the following: model information, data source information, AI service computational load (for example, computing power size or type), and an address of an application server.

In an embodiment of the present application, the information about an AI resource node includes at least one of the following: an IP address of the AI resource node, identifier information of the AI resource node, and an FQDN of the AI resource node.

In an embodiment of the present application, before the sending, by the first network element, a third message to a third network element, the method further includes:
sending, by the first network element, a fifth message (for example, a model request message) to a fourth network element, where the fifth message is used to request model information from the fourth network element; and
receiving, by the first network element, a sixth message (for example, a model response message) sent by the fourth network element in response to the fifth message, where the sixth message is used to indicate the model information.

In this embodiment, the fourth network element is used for model management. For example, the fourth network element can determine a suitable model according to an external model request, and the fourth network element may also be referred to as an AI model management function or a model management function.

In an embodiment of the present application, the sending, by the first network element, a fifth message to a fourth network element includes:
in a case that a first condition is satisfied, sending, by the first network element, the fifth message to the fourth network element; where
the first condition includes at least one of the following:
   (1) the third message does not include model information;
   (2) the third message includes a tenth indication, where the tenth indication is used to indicate to obtain model information from the fourth network element; and
   (3) the first network element is not capable of obtaining model information.

In an embodiment of the present application, before the sending, by the first network element, a fifth message to a fourth network element, the method further includes:
selecting, by the first network element, the fourth network element according to at least one of network identifier information, an AI service identifier, a supported AI service, service area information, and information about a supported model.

In an embodiment of the present application, before the sending, by the first network element, a third message to a third network element, the method further includes:
sending, by the first network element, a seventh message (for example, a data source request message) to a fifth network element, where the seventh message is used to request the fifth network element to determine data source information; and
receiving, by the first network element, an eighth message (for example, a data source response message) sent by the fifth network element in response to the seventh message, where the eighth message is used to indicate the data source information.

In this embodiment, the fifth network element is used to perform data management. For example, the fifth network element can determine a data source according to a data request. The fifth network element may also be referred to as a data source management function.

In an embodiment of the present application, the sending, by the first network element, a seventh message to a fifth network element includes:
in a case that a second condition is satisfied, sending, by the first network element, the seventh message to the fifth network element; where
the second condition includes at least one of the following:
   (1) the third message does not include data source information;
   (2) the third message includes an eleventh indication, where the eleventh indication is used to indicate to obtain data source information from the fifth network element; and
   (3) the first network element is not capable of obtaining data source information.

In an embodiment of the present application, before the sending, by the first network element, a seventh message to a fifth network element, the method further includes:
selecting, by the first network element, the fifth network element according to at least one of network identifier information, an AI service identifier, a supported AI service, service area information, and information about a supported model.

In an embodiment of the present application, after the receiving, by the first network element, a fourth message sent by the third network element in response to the third message, the method further includes:
sending, by the first network element, a ninth message (for example, a bearer establishment request message) to a sixth network element, where the ninth message includes at least one of the following: information about an AI resource node, AI service QoS information, and AI service policy information; and
receiving, by the first network element, a tenth message (bearer establishment response message) sent by the sixth network element in response to the ninth message, where the tenth message includes information about an AI resource node.

In this embodiment, the sixth network element has functionalities such as service data flow detection, and policy generation and provision, where policies include terminal policies, session policies, and the like. The sixth network element may also be referred to as a policy charging function or a policy control function (Policy Control Function, PCF).

In an embodiment of the present application, before or after or in a case of the receiving, by a first network element, a first message used to request modification of an AI resource, the method further includes:
receiving, by the first network element, an eleventh message; where
the eleventh message is used to request at least one of the following: modifying a model of an AI service; modifying a data source of an AI service; or modifying an AI resource node providing AI service processing.

In an embodiment of the present application, in a case that the eleventh message (for example, a model modification request message) is used to request modification of a model of an AI service, the eleventh message includes updated model information.

In an embodiment of the present application, in a case that the eleventh message (for example, a data source modification request message) is used to request modification of a data source of an AI service, the eleventh message includes updated data source information.

In an embodiment of the present application, in a case that the eleventh message (for example, an AI resource modification request message) is used to request modification of an AI resource node providing AI service processing, the eleventh message includes updated information about an AI resource node.

In an embodiment of the present application, before or after or in a case of the sending, by the first network element, a second message used to indicate an AI resource modification result, the method further includes:
sending, by the first network element, a twelfth message in response to the eleventh message; where
the twelfth message is used to indicate at least one of the following: a model modification result; a data source modification result; and an AI resource modification result.

In this embodiment, the twelfth message may also be referred to as a model modification response message, a data source modification response message, or an AI resource modification response message.

In an embodiment of the present application, after the receiving, by a first network element, a first message used to request modification of an AI resource, and before the sending, by the first network element, a second message used to indicate an AI resource modification result, the method further includes:
sending, by the first network element, a thirteenth message (for example, a bearer modification request message) to a seventh network element, where the thirteenth message is used to request modification of a communication resource allocated for an AI service; and
receiving, by the first network element, a fourteenth message (for example, a bearer modification response message) sent by the seventh network element in response to the thirteenth message, where the fourteenth message is used to indicate a communication resource modification result.

In this embodiment, the seventh network element has functionalities such as service data flow detection, and policy generation and provision, where policies include terminal policies, session policies, and the like, and the seventh network element may also be referred to as a policy charging function or a policy control function (Policy Control Function, PCF).

In an embodiment of the present application, after the receiving, by a first network element, a first message used to request release of a network resource or AI resource, the method further includes:
sending, by the first network element, a fifteenth message (for example, a model release message) to an eighth network element, where the fifteenth message is used to request release of an association state between a model and an AI service or release of an association state between a model and a terminal; and
receiving, by the first network element, a sixteenth message (for example, a model release response message) sent by the eighth network element in response to the fifteenth message, where the sixteenth message is used to indicate a model release result.

In this embodiment, the eighth network element is used for model management, and the eighth network element may also be referred to as an AI model management function or a model management function.

In an embodiment of the present application, the fifteenth message includes at least one of the following: a terminal identifier, AI service information, a model subscription association identifier, a used model identifier, and an address of the eighth network element.

In an embodiment of the present application, the sending, by the first network element, a fifteenth message to an eighth network element includes:
in a case that a third condition is satisfied, sending, by the first network element, the fifteenth message to the eighth network element; where
the third condition includes at least one of the following: AI service information includes a used model identifier, and the model release request message includes a twelfth indication, where the twelfth indication is used to indicate release of a model associated with an AI service.

In an embodiment of the present application, after the receiving, by a first network element, a first message used to request release of a network resource or AI resource, the method further includes:
sending, by the first network element, a seventeenth message (for example, a data source release message) to a ninth network element, where the seventeenth message is used to request release of an association state between data and an AI service, or release of an association state between data and a terminal; and
receiving, by the first network element, an eighteenth message (a data source release response message) sent by the ninth network element in response to the seventeenth message, where the eighteenth message is used to indicate a data source release result.

In this embodiment, the ninth network element is used for data management, and the ninth network element may also be referred to as a data plane management function or a data source management function.

In an embodiment of the present application, the seventeenth message includes at least one of the following: a terminal identifier, AI service information, data source information, and an address of the ninth network element.

In an embodiment of the present application, the sending, by the first network element, a seventeenth message to a ninth network element includes:
in a case that a fourth condition is satisfied, sending, by the first network element, the seventeenth message to the ninth network element; where
the fourth condition includes at least one of the following: AI service information includes a used model identifier, and the data source release request message includes a thirteenth indication, where the thirteenth indication is used to indicate release of a data plane connection.

In an embodiment of the present application, after the receiving, by the first network element, the request for release of a network resource or AI resource, the method further includes:
sending, by the first network element, a nineteenth message (for example, an AI resource release message) to a tenth network element, where the nineteenth message is used to request release of an AI resource established for an AI service; and
receiving, by the first network element, a twentieth message (for example, an AI resource release response message) sent by the tenth network element in response to the nineteenth message, where the twentieth message is used to indicate an AI resource release result.

In this embodiment, the tenth network element is used for service resource management. For example, the tenth network element can perform allocation update and release of an AI or computing power resource on demand, or the tenth network element can also perform status update maintenance of an AI or computing power resource node on demand. The tenth network element may also be referred to as an AI resource management function, a resource management function, or a computing power resource management function.

In an embodiment of the present application, the nineteenth message includes at least one of the following: an address of the tenth network element, and AI service information.

In an embodiment of the present application, the twentieth message includes at least one of the following: a fourteenth indication, where the fourteenth indication is used to indicate AI resource release success or AI resource release failure, and a fifteenth indication, where the fifteenth indication is used to indicate a cause value for AI resource release failure.

In an embodiment of the present application, after the sending, by the first network element, a second message used to indicate a network resource release result, the method further includes:
sending, by the first network element, a twenty-first message (for example, a bearer release request message) to an eleventh network element, where the twentieth message is used to request release of a communication resource allocated for an AI service; and
receiving, by the first network element, a twenty-second message (for example, a bearer release response message) sent by the eleventh network element in response to the twenty-first message, where the twenty-second message is used to indicate a communication resource release result, and the communication resource release result is used to indicate communication resource release success or failure.

In this embodiment, the eleventh network element has functionalities such as service data flow detection, and policy generation and provision, where policies include terminal policies, session policies, and the like, and the eleventh network element may also be referred to as a policy charging function or a PCF.

In an embodiment of the present application, the twenty-first message includes at least one of the following: a terminal identifier, PDU session information, AI service information, network identifier information, an address of a second network element, a release cause, and policy information, where the second network element has a communication management function, for example, the second network element may be an SMF.

In an embodiment of the present application, the twenty-second message includes at least one of the following: a sixteenth indication, where the sixteenth indication is used to indicate communication resource release success or communication resource release failure, and a seventeenth indication, where the seventeenth indication is used to indicate a cause value for communication resource release failure, for example, a communication resource is not present, or a communication resource is in use and cannot be released.

In an embodiment of the present application, the sending, by the first network element, a twenty-first message to an eleventh network element includes:
in a case that the second message indicates AI resource release success, sending, by the first network element, the twenty-first message to the eleventh network element.

In an embodiment of the present application, the first message or the second message or the third message or the fourth message or the fifth message or the sixth message or the seventh message or the eighth message or the ninth message or the tenth message or the eleventh message or the twelfth message or the thirteenth message or the fourteenth message or the fifteenth message or the sixteenth message or the seventeenth message or the eighteenth message or the nineteenth message or the twentieth message or the twenty-first message or the twenty-second message is included in at least one of the following: a SIP message, an HTTP message, and a newly added protocol message, where the newly added protocol message is used to transmit an AI-related message.

In this embodiment, based on the request from the terminal, the network allocates an AI resource, or modifies an AI resource, or releases a network resource or AI resource, so that the operator network can not only provide basic communication guarantees but also provide AI service processing functionalities.

Referring to FIG. 4, an embodiment of the present application provides an AI service processing method executed by a second network element, including the following specific steps: step 401 and step 402.

Step 401: The second network element receives a first message, where the first message (for example, a PDU session establishment request message) is used to request allocation of a network resource for an AI service.

Step 402: The second network element sends to a terminal a second message (for example, a PDU session establishment response message) in response to the first message, where the second message includes indication information indicating an address of a first network element, where the first network element is an AI service processing entry network element.

In this embodiment, the functionality of the second network element includes at least one of the following: an endpoint of a short message (Short Message, SM) message for a non-access-stratum (Non-Access-Stratum, NAS) message; session establishment, modification, and release; management of UE IP allocation; selection and control of UPF; collection of charging data and support for charging interfaces; determination of a session and service continuity (Session and Service Continuity, SSC) mode for a session; and downlink data indication. For example, the second network element may be an SMF.

In an embodiment of the present application, the first message includes a third indication, where the third indication is used to indicate a network to establish a dedicated PDU session for an AI service.

In an embodiment of the present application, after the receiving, by a second network element, a first message, and before the sending, by the second network element, a second message to a terminal, the method further includes:
determining, by the second network element, to establish a PDU session for an AI service according to at least one of the third indication, a DNN, and an S-NSSAI.

In an embodiment of the present application, before the sending, by the second network element to a terminal, a second message in response to the first message, the method further includes:
selecting, by the second network element, one first network element according to the third indication or first information; where
the first information includes at least one of the following:
   (1) an area of interest;
   (2) terminal AI subscription information, where the subscription information is related to an AI service;
   (3) network identifier information of a PDU session;
   (4) an AI service identifier;
   (5) a supported AI service;
   (6) a first network element capability;
   (7) a location of a user plane function UPF; and
   (8) a terminal location.

In an embodiment of the present application, the first message or the second message is included in at least one of the following: a SIP message, an HTTP message, and a newly added protocol message, where the newly added protocol message is used to transmit an AI-related message.

In the embodiments of the present application, the second network element can allocate a network resource for an AI service according to the first message from the terminal, thereby enabling the operator network to provide AI services to the terminal, so that the operator network can not only provide basic communication guarantees but also provide AI service processing functionalities.

The embodiments of the present application will be introduced below in conjunction with specific processes of Embodiment One, Embodiment Two, and Embodiment Three.

### Embodiment One: UE triggers AI service bearer establishment.

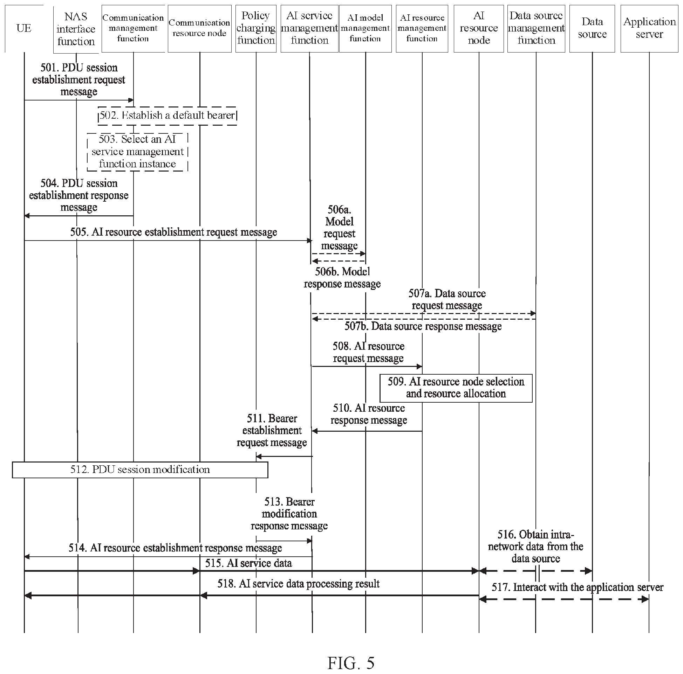

Referring to FIG. 5, the specific steps are as follows:
Step 501: The UE sends a PDU session establishment request message to a communication management function, where the PDU session establishment request message is used to request a network to allocate a network resource for an AI service. Specifically, the PDU session establishment request message requests the network to establish a signaling bearer for an AI service.

Optionally, the PDU session establishment request message includes a third indication, where the third indication is used to indicate a network to establish a dedicated PDU session for an AI service, and can be implemented in at least one of the following:
(1) The third indication is included in an ePCO IE, where the third indication is used to indicate that the UE requests an address of a first network element, for example, an address of an AI service management function. Specifically, "AI service management function IPv6/IPv4 Address Request" is added in the ePCO IE.
(2) The third indication is included in a 5GSM capability, where the third indication is used to indicate that the UE supports AI service processing. Specifically, "Transfer of AI management information containers supported" indication is added in the 5GSM capability IE.

Optionally, the UE sends a PDU session establishment request message based on a URSP rule.

Optionally, the URSP rule includes a first indication, where the first indication is used for the UE to identify AI service traffic and route the AI service traffic to an existing PDU session or establish a new PDU session.

Optionally, the first indication includes at least one of the following: a DNN dedicated to an AI service, an S-NSSAI, an AI service identifier, an AI operating system identifier, and an AI application identifier.

Optionally, before the UE sends the PDU session establishment request message based on the URSP rule, the terminal sends a second indication, where the second indication is used to indicate at least one of the following: the terminal supports AI processing, the terminal supports an AI service, and the terminal supports a policy for an AI service (for example, Support of AI policy by the UE).

Optionally, the second indication is included in a UE policy classmark (UE policy classmark) or a PCO IE or an ePCO IE.

Step 502: The communication management function establishes a dedicated PDU session for the AI service according to the received PDU session establishment request message and establishes a default bearer.

Optionally, for the PDU session establishment process in this embodiment, reference may be made to an existing PDU session establishment procedure, which will not be repeated here.

Optionally, the communication management function determines to establish the dedicated PDU session according to at least one of the following: (1) the third indication (see step 501); and (2) a dedicated DNN or S-NSSAI.

Step 503: The communication management function determines, according to the third indication, that an AI service management function instance needs to be selected.

Optionally, the communication management function comprehensively considers some factors to select the AI service management function instance by using a network repository function (Network Repository Function, NRF) or according to local configuration information, and at least one of the following factors is considered:
(1) an area of interest (Area of interest);
(2) UE AI task-related subscription information;
(3) a DNN of a PDU session;
(4) an S-NSSAI of a PDU session;
(5) an AI service identifier;
(6) a supported AI service;
(7) an AI service management function instance capability (for example, the capability is determined by AI service processing delay, AI service processing accuracy, and AI service computational load);
(8) a UPF location; and
(9) a UE location.

Step 504: The communication management function sends a PDU session establishment response message to the UE, used to indicate that the PDU session establishment for the AI service is completed, and including an address of an AI service management function or an address of an application server.

Optionally, the UE obtains the AI service management function address by querying an application server, or the application server can provide the service.

Step 505: The UE sends an AI resource establishment request message to the AI service management function, used to request a network to allocate an AI resource.

Optionally, the AI resource establishment request message includes at least one of the following:
(1) AI service requirement information (or referred to as AI service requirement description information).
   Optionally, the AI service requirement information includes at least one of the following:
   (a) An AI service identifier.
      For example, it is used to determine whether the AI service is an inference service (for example, environment reconstruction or face recognition) or a training service.
   (b) An AI service QoE requirement.
   (c) AI service QoS information.
      Optionally, the AI service QoS information includes at least one of the following: AI service processing delay, AI service processing accuracy, AI service computational load, data processing scale, and the like.
   (d) Model-related parameters, for example, model size, model training algorithm, model precision/accuracy, model manufacturer, model identifier, model function identifier, model architecture, or weight parameter.
   (e) Whether intra-network data and data source indication are needed.
   (f) An AI service type.
(2) A DNN.
(3) An S-NSSAI.
(4) A session type indication, used to indicate whether a session is a PDU session or an AI session.
(5) PDU session information, used to indicate a network to use a PDU session channel to transmit AI service data and allocate a corresponding communication resource.
   Optionally, the PDU session information includes at least one of the following: a PDU session identifier, and a PDU session type.
(6) A policy identifier.
   Optionally, the policy identifier includes an AI service policy indication negotiated between the UE and a policy charging function.
(7) An address of an application server, where the application server can provide an AI service.

Optionally, the AI resource establishment request message is carried in a PDU data packet and can be transmitted in at least one of the following manners: a SIP message; an HTTP message; a newly added protocol message; and a newly added protocol message, where the newly added protocol message is used to transmit an AI-related message.

Step 506a: The AI service management function sends a model request message to an AI model management function, used to determine model information.

Optionally, step 506a is performed in a case that a first condition is satisfied; where
the first condition includes at least one of the following:
(1) the AI resource establishment request message does not include model information;
(2) the AI resource establishment request message includes an indication: interaction with the AI model management function is needed; and
(3) the AI service management function is not capable of obtaining model information.

Optionally, before step 506a, at least one of the following factors is taken into account when the AI service management function selects an AI model management function instance: DNN; S-NSSAI; AI service identifier; supported AI service; service area information; and information about a supported model.

Step 506b: The AI model management function sends a model response message to the AI service management function, used to indicate model information.

Optionally, the AI service management function can determine the data source information according to the model information, and if the data source information is already determined, step 509 is not performed.

Step 507a: The AI service management function sends a data source request message to a data source management function, used to determine data source information;
Optionally, step 507a is performed in a case that a second condition is satisfied; where
the second condition includes at least one of the following: the AI resource establishment request message does not include data source information; the AI resource establishment request message includes an indication: interaction with the data source management function is needed; and the AI service management function is not capable of obtaining data source information.

Optionally, the AI service management function selects a data source management function instance, considering at least one of the following factors: DNN; S-NSSAI; AI service identifier; supported AI services; service area information; and data source information.

Step 507b: The data source management function sends a model response message to the AI service management function, used to indicate data source information.

Optionally, the AI service management function, the AI model management function, and the AI resource management function may be integrated, and in a case of integration, steps 506 and 507 are omitted.

Step 508: The AI service management function sends an AI resource request message to the AI resource management function, and the AI resource management function determines a suitable AI resource node according to the AI resource request message.

Optionally, the AI resource request message includes at least one of the following:
(1) Model information.
   For example, the model information includes but is not limited to at least one of the following: a model, and a model download address.
(2) Data source information, for example, a data source address.
(3) AI service computational load, for example, computing power size or type.
(4) An address of an application server.

Step 509: The AI resource management function selects a suitable AI resource node according to the AI resource request message and provides AI resource configuration information to the AI resource node, used to indicate the AI resource node to process and forward AI service data.

Optionally, the AI resource configuration information includes at least one of the following:
(1) data source information, for example, a data source address;
(2) AI service detection information;
(3) an AI service processing rule; and
(4) an address of an application server.

Step 510: The AI resource management function sends an AI resource response message to the AI service management function.

Optionally, the AI resource response message includes information about an AI resource node, where the information about an AI resource node includes at least one of the following: an IP address; identifier information; and an FQDN.

Optionally, interaction messages between the UE and the AI service management function, and between various AI functions can be transmitted in at least one of the following manners: a SIP message; an HTTP message; a newly added protocol message, where the newly added protocol message is used to transmit an AI-related message.

Step 511: The AI service management function sends a bearer establishment request message to a policy charging function.

Optionally, the bearer establishment request message includes at least one of the following: information about an AI resource node, AI service QoS information, and policy information.

Step 512: The policy charging function generates a policy according to the received bearer establishment request message and triggers a PDU session modification procedure, used to establish a dedicated bearer for an AI service.

Step 513: The policy charging function sends a bearer establishment response message to the AI service management function, used to notify a result of dedicated bearer establishment for an AI service.

Step 514: The AI service management function sends an AI resource establishment response message to the UE, used to feed back an AI resource establishment result.

Optionally, the AI resource establishment response message includes information about an AI resource node.

Step 515: The terminal triggers AI service data transmission, where AI service data is carried on a PDU session and routed to an AI resource node via a communication resource node.

For example, the functionality of the communication resource node includes at least one of the following: serving as an anchor point for mobility within a radio access technology (Radio Access Technology, RAT) or between RATs (when applicable); serving as a session point for interconnecting an external PDU with a data network; packet routing and forwarding; packet inspection; and implementation of a user plane part policy rule, such as gating, redirection, or traffic steering.

Optionally, the communication resource node may be a UPF.

Optionally, the AI service data includes at least one of the following: UE data; and model information.

Optionally, the communication management function does not know about information about an AI resource node, and the UE sets the information about an AI resource node as a destination address.

Step 516: Optionally, the AI resource node obtains intra-network data from a data source node.

Optionally, the AI resource node determines data source information in a manner including but not limited to at least one of the following: obtaining it from AI resource configuration information; and obtaining it from local configuration.

Step 517: Optionally, the AI resource node interacts with an AS according to a service-level agreement (Service-Level Agreement, SLA), used to execute complete AI service logic.

Optionally, the SLA indicates the AI resource node to perform only part of service processing.

Optionally, the AI resource node determines an address of an application server in a manner including but not limited to at least one of the following: obtaining it from AI resource configuration information; and obtaining it from local configuration.

Step 518: The AI resource node performs processing according to a model, UE data, and network data, and feeds back a processing result to the UE.

### Embodiment Two: UE triggers AI service bearer modification

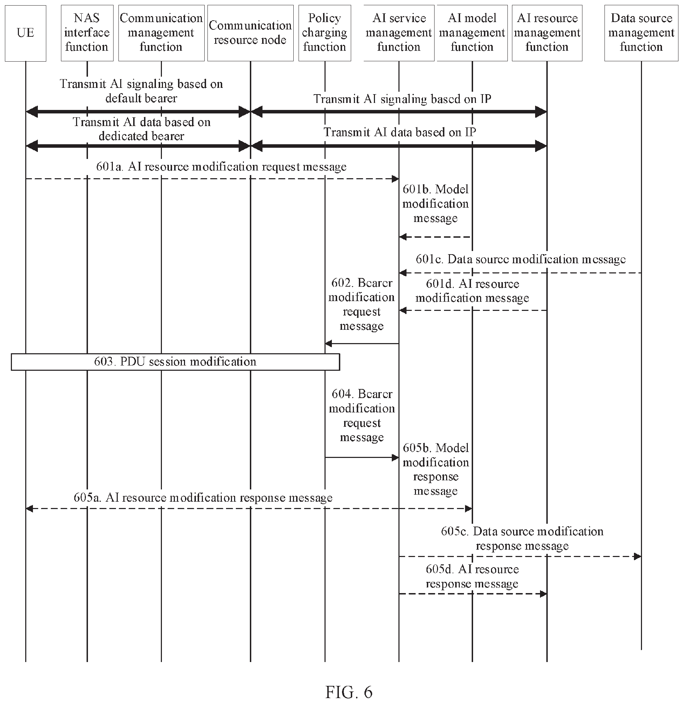

Referring to FIG. 6, the specific steps are as follows:
Step 601a: The UE sends an AI resource modification request message to an AI service management function, used to request a network to modify a related bearer for an AI service in the network.

Optionally, the AI resource modification request message includes at least one of the following:
(1) AI service requirement information.

Optionally, the AI service requirement information includes at least one of the following:
(1) AI service requirement information (or referred to as AI service requirement description information).
   Optionally, the AI service requirement information includes at least one of the following:
   (a) An AI service identifier.
      For example, it determines whether an AI service is an inference service (for example, environment reconstruction or face recognition), a training service, or the like.
   (b) An AI service QoE requirement.
   (c) AI service QoS information.
      Optionally, the AI service QoS information includes at least one of the following: AI service processing delay, AI service processing accuracy, AI service computational load, data processing scale, and the like.
   (d) Model-related parameters, for example, model size, model training algorithm, model precision/accuracy, model manufacturer, model identifier, model function identifier, model architecture, or weight parameter.
   (e) Whether intra-network data and data source indication are needed.
   (f) An AI service type.
(2) PDU session information, used to indicate a network to allocate a corresponding communication resource to an AI session.

Optionally, the PDU session information includes at least one of the following: a PDU session identifier, a PDU session type, QoS information, a DNN, and an S-NSSAI.

Optionally, the QoS information includes at least one of the following: a QoS flow (flow) identifier, a QoS rule, QoS flow description information, and the like.

(3) Information used to indicate that an AI service requires AS collaboration.

(4) An address of an application server.

Optionally, the application server address includes at least one of the following: an AS IP address, an AS port number, an AS FQDN, and an AS uniform resource locator (Uniform Resource Locator, URL). In some embodiments, the application server address is obtained by the UE through a domain name system (Domain Name System, DNS) query.

Step 601b: The AI model management function sends a model modification request message to the AI service management function, used to modify a model required for the AI service.

Optionally, the model modification request message includes updated model information.

Step 601c: The data source management function sends a data source modification request message to the AI service management function, used to modify a data source required for the AI service.

Optionally, the data source modification request message includes updated data source information.

Step 601d: The AI resource management function sends an AI resource modification request message to the AI service management function, used to modify an AI resource node providing AI service processing.

Optionally, the AI resource modification request message includes updated model information.

Optionally, the AI resource management function determines, according to at least one of the following, that an AI resource node needs to update:
(1) the AI resource node has an insufficient AI processing capability, for example, computing power changes; and
(2) the AI resource management function subscribes to AI service configuration information change notifications from the AI service management function, and the AI service management function notifies the AI resource management function when a model or data source changes.

Step 602: The AI service management function sends a bearer modification request message to a policy charging function, used to request modification of a bearer for the AI service.

Optionally, the policy charging function determines an updated communication policy according to the bearer modification request message.

Optionally, the bearer modification request message includes but is not limited to: updated AI service requirement description information.

Step 603: The policy charging function sends an updated communication policy to a communication management function, triggering a PDU session modification procedure, used to modify a dedicated bearer to a suitable one for the AI service.

Step 604: The policy charging function sends a bearer update response message to the AI service management function, used to notify a bearer modification result.

Optionally, the bearer update response message may include communication resource node information.

Step 605a: The AI service management function sends an AI resource modification response message to the UE, used to notify an AI resource modification result.

Optionally, the AI resource modification response message may include updated information about an AI resource node.

Step 605b: The AI service management function sends a model modification response message to the AI model management function, used to notify a model modification notification.

Step 605c: The AI service management function sends a data source modification response message to the data source management function, used to notify a data source modification notification.

Step 605d: The AI service management function sends an AI resource modification response message to the AI resource management function, used to notify an AI resource modification result.

Optionally, the AI resource modification response message may include an updated communication resource node.

### Embodiment Three: UE triggers AI service bearer release

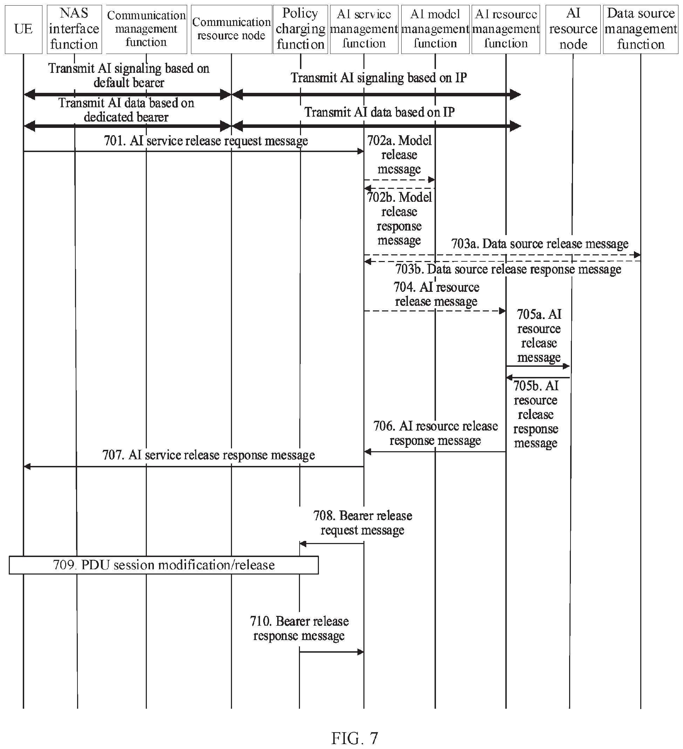

Referring to FIG. 7, the specific steps are as follows:

Step 701: The UE sends an AI service release request message to an AI service management function, where the AI service release request message is used to request a network to release a response service resource (including a communication resource and an AI resource) established for an AI service.

Optionally, the AI service release request message includes at least one of the following:

### (1) AI service information.

Optionally, the AI service information includes at least one of the following: an AI service identifier, an AI service description, a model correlation ID (model correlation ID), a used model identifier (model ID), and the like, where the AI service information here is distinguished from AI session information. The AI service identifier represents a string of standardized identifier information. The AI service description represents the purpose of the AI service, for example, an inference service (specifically, environment reconstruction or face recognition), or a training service.

For example, the AI session information includes at least one of the following: an AI session identifier, an AI session type, an AI resource identifier, a DNN related to an AI session, a slice related to an AI session, QoS information related to an AI session, an AI resource node address, and the like.

### (2) PDU session information.

Optionally, the PDU session information includes at least one of the following: a PDU session identifier (session ID), a PDU session type, a communication resource identifier, a communication resource node address, and the like. In an embodiment, the PDU session type indicates an AI session.

(3) Policy information, including an AI policy identifier, a communication policy identifier, a total policy identifier (a total policy includes a comprehensive policy of AI and communication), and a policy charging function address.

(4) Network identifier information.

Optionally, the network identifier information includes at least one of the following: a DNN, and an S-NSSAI.

(5) A release cause, indicating a type of AI service resource release, including normal release, release due to handover, or temporary release.

(6) A release type: release only a communication resource, release only an AI resource; or release all resources.

Optionally, an implementation manner of carrying the AI service release request message includes at least one of the following: a SIP message; an HTTP message; and a newly added protocol message, where the newly added protocol message is used to transmit an AI-related message.

Step 702a: Optionally, the AI service management function sends a model release message to the AI model management function, used to release an association state between a model and an AI service, or release an association state between a model and UE.

Optionally, the model release message includes at least one of the following: a UE identifier, an AI service identifier, an AI service description, a model subscription association identifier, a used model identifier, and an address of an AI model management function.

It should be noted that model release does not request the AI model management function to completely delete a certain model, but release is a change in association state triggered because an AI service terminates, that is, the UE or the AI service is no longer a consumer of the model, which is a change in binding relationship (de-association). When a subsequent new AI service is triggered, a model may be rebound, or the same model may be bound.

Optionally, step 702a is performed in a case that a third condition is satisfied; where
the third condition includes at least one of the following: AI service information includes a used model identifier (model ID); and an AI session release request message includes information indicating that a model needs to be released.

Step 702b: Optionally, the AI model management function sends a model release response message to the AI service management function, used to reply whether a model associated with the AI service is successfully released.

Step 703a: Optionally, the AI service management function sends a data source release message to the data source management function, used to release an association state between data and an AI service, or release an association state between data and UE.

Optionally, the data release message includes at least one of a UE identifier, an AI service identifier, an AI service description, data source information, and an AI service management function address.

It should be noted that data source release does not request the data source management function to delete data, but release is a change in association state triggered because an AI service terminates, that is, the UE or the AI service is no longer a consumer of the data source, which is a change in binding relationship (de-association). When a subsequent new AI service is triggered, binding may be performed again.

Optionally, step 803a is performed in a case that a fourth condition is satisfied, where
the fourth condition includes at least one of the following: AI service information includes a used model identifier (model ID); and the AI resource release request includes information indicating that a data plane connection needs to be released.

Step 703b: Optionally, the data source management function sends a data release response message to the AI service management function, used to reply whether a connection to a data source associated with an AI service is successfully released.

Step 704: The AI service management function sends an AI resource release message to the AI resource management function, used to request release of an AI resource established for an AI service.

Optionally, the AI resource includes at least one of the following: a computing resource reserved for an AI service, a storage resource, and an AI link resource (that is, an AI bearer).

Optionally, the AI resource release message includes at least one of the following: an AI resource management function address, and AI service information.

Step 705a: The AI resource management function sends an AI resource release message to an AI resource node, used to release an AI bearer associated with an AI service or an AI session.

Optionally, the AI bearer release message includes at least one of the following: an AI resource node address, and AI service information.

Step 705b: The AI resource node sends an AI resource release response message to the AI resource management function, used to reply whether an AI bearer is successfully released.

Optionally, the AI resource release response message carries a cause value for release failure, where the cause value for release failure includes at least one of the following: an AI bearer is not present, an AI bearer is in use and cannot be released, or the like.

Step 706: The AI resource management function sends an AI resource release response message to the AI service management function, used to reply whether an AI resource is successfully released.

Optionally, the AI resource release response message carries a cause value for release failure, including: an AI resource is not present, an AI resource is in use and cannot be released, and the like.

Step 707: The AI service management function sends an AI service release response message to the UE, used to reply whether an AI resource is successfully released.

Optionally, the AI resource release response message carries a cause value for release failure, including: an AI resource is not present, an AI resource is in use and cannot be released, and the like.

Step 708: Optionally, the AI service management function sends a bearer release request message to a policy charging function, used to request release of a communication resource (communication bearer) allocated for an AI service.

Optionally, the communication resource release message includes at least one of the following: a UE identifier, PDU session information, AI service information, a DNN, an S-NSSAI, a communication management function address, a release cause, policy information, and the like.

Optionally, step 808 is performed only after the AI resource release response in step 806 indicates AI resource release success.

Step 709: The policy charging function triggers the communication management function to initiate a PDU session modification or release message, used to release a dedicated communication bearer or all communication bearers established for an AI service, where the PDU session modification or release message includes at least one of the following: PDU session information, and information about an AI resource node.

Optionally, a communication resource node sends a release communication bearer response message to a communication resource management function, used to reply whether a communication bearer is successfully released.

Optionally, the release communication bearer response message carries a cause value for release failure, including: a communication bearer is not present, a communication bearer is in use and cannot be released, and the like.

Optionally, the communication management function determines to initiate PDU session modification according to at least one of the following: a release type is release of partial resources, and policy information that needs to be released is indicated; and policy information includes a deletion indication, used to indicate deletion of a dedicated bearer.

Optionally, the communication management function determines to initiate PDU session release according to at least one of the following: a release type is release of all resources; and policy information includes a deletion indication, used to indicate deletion of a signaling bearer.

Step 710: The policy charging function sends a bearer release response message to the AI service management function, used to reply whether a communication resource is successfully released.

Optionally, the bearer release response message carries a cause value for release failure, where the cause value for release failure may include at least one of the following: a communication resource is not present, a communication resource is in use and cannot be released, and the like.

In this embodiment, a NAS interface function has at least one of the following functions: an endpoint of an AN signaling interface (N2), and an endpoint of NAS (N1) signaling (MM message); responsible for encryption and integrity protection of NAS messages, and responsible for registration, access, mobility management, authentication, short message, and the like. The NAS interface function may be an AMF.

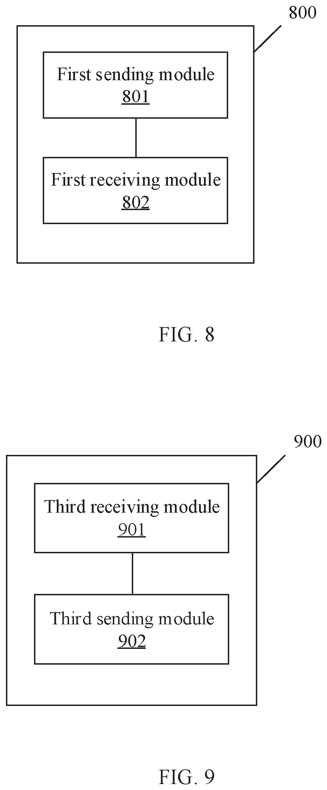

Referring to FIG. 8, an embodiment of the present application provides an AI service processing apparatus applied to a terminal, where the apparatus 800 includes:
a first sending module 801, configured to send a first message; and
a first receiving module 802, configured to receive a second message, where the second message is used to respond to the first message; where
the first message is used to request allocation of a network resource for an AI service, and the second message includes indication information indicating an address of a first network element, where the first network element is an AI service processing entry network element;
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

In an embodiment of the present application, the first sending module 801 is further configured to send the first message based on a URSP rule, where the first message is used to request allocation of a network resource for an AI service; where
the URSP rule includes a first indication, and the first indication is used for the terminal to identify AI service traffic and route the AI service traffic to an existing PDU session or establish a new PDU session.

In an embodiment of the present application, the first indication includes at least one of the following: a DNN dedicated to an AI service, an S-NSSAI dedicated to an AI service, an AI service (AI service) identifier, an AI operating system identifier, an AI application identifier.

In an embodiment of the present application, the apparatus further includes: a second sending module, configured to send a second indication, where the second indication is used to indicate at least one of the following: the terminal supports AI processing, the terminal supports an AI service, and the terminal supports a policy for an AI service; and
a second receiving module, configured to receive the URSP rule related to the second indication.

In an embodiment of the present application, the second indication is included in a UE policy classmark or a PCO IE or an ePCO information element.

In an embodiment of the present application, in a case that the first message is used to request allocation of a network resource for an AI service, the first message includes a third indication, where the third indication is used to indicate a network to establish a dedicated PDU session for an AI service.

In an embodiment of the present application, in a case that the first message is used to request allocation of an AI resource for an AI service, the first message includes at least one of the following:
(1) AI service requirement information;
(2) a DNN;
(3) an S-NSSAI;
(4) a fourth indication, where the fourth indication is used to indicate a session type;
(5) PDU session information;
(6) AI service policy information; and
(7) an address of an application server.

In an embodiment of the present application, in a case that the first message is used to request modification of an AI resource for an AI service, the first message includes at least one of the following:
(1) AI service requirement information;
(2) PDU session information;
(3) a fifth indication, where the fifth indication is used to indicate that completion of an AI service requires application server collaboration; and
(4) an address of an application server.

In an embodiment of the present application, the first message is used to request release of a network resource allocated for an AI service, and the first message includes at least one of the following:
(1) AI service requirement information;
(2) PDU session information;
(3) AI service policy information;
(4) communication policy information;
(5) a DNN;
(6) an S-NSSAI;
(7) a sixth indication, where the sixth indication is used to indicate an AI service release cause; and
(8) a seventh indication, where the seventh indication is used to indicate an AI service release type.

In an embodiment of the present application, the AI service requirement information includes at least one of the following:
(1) an AI service identifier;
(2) an AI service type;
(3) an AI service quality of experience QoE requirement;
(4) AI service quality of service QoS information;
(5) model-related parameters;
(6) an eighth indication, where the eighth indication is used to indicate whether intra-network data is needed; and
(7) a ninth indication, where the ninth indication is used to indicate whether a data source is needed.

In an embodiment of the present application, the third indication is used to indicate a network to establish a dedicated PDU session for an AI service, including at least one of the following:
(1) the third indication is used to indicate the terminal to request the address of the first network element, and the third indication is included in an ePCO IE; and
(2) the third indication is used to indicate that the terminal supports AI service processing, and the third indication is included in a UE capability information element.

In an embodiment of the present application, the indication information indicating the address of the first network element includes at least one of the following: the address of the first network element, and an address of an application server.

In an embodiment of the present application, the AI resource establishment result includes information about an AI resource node.

In an embodiment of the present application, the AI resource modification result includes updated information about an AI resource node.

In an embodiment of the present application, the network resource release result includes a cause value for release failure.

In an embodiment of the present application, the information about an AI resource node includes at least one of the following: an IP address of the AI resource node, identifier information of the AI resource node, and an FQDN of the AI resource node.

In an embodiment of the present application, after the receiving, by the terminal, a second message used to indicate an AI resource establishment result, the method further includes:
sending, by the terminal, AI service data to an AI resource node corresponding to the information about an AI resource node via a PDU session.

In an embodiment of the present application, the first message or the second message is included in at least one of the following: a SIP message, an HTTP message, and a newly added protocol message used to transmit an AI-related message.

The apparatus provided in the embodiments of the present application can implement various processes implemented by the method embodiment of FIG. 2 and achieve the same technical effects. To avoid repetition, details are not repeated here.

Referring to FIG. 9, an embodiment of the present application provides an AI service processing apparatus applied to a first network element, where the apparatus 900 includes:
a third receiving module 901, configured to receive a first message; and
a third sending module 902, configured to send a second message, where the second message is used to respond to the first message; where
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

In an embodiment of the present application, in a case that the first message is used to request allocation of an AI resource for an AI service, the first message includes at least one of the following:
(1) AI service requirement information;
(2) a DNN;
(3) an S-NSSAI;
(4) a fourth indication, where the fourth indication is used to indicate a session type;
(5) PDU session information;
(6) AI service policy information; and
(7) an address of an application server.

In an embodiment of the present application, in a case that the first message is used to request modification of an AI resource for an AI service, the first message includes at least one of the following:
(1) AI service requirement information;
(2) PDU session information;
(3) a fifth indication, where the fifth indication is used to indicate that completion of an AI service requires application server collaboration; and
(4) an address of an application server.

In an embodiment of the present application, the first message is used to request release of a network resource allocated for an AI service, and the first message includes at least one of the following:
(1) AI service requirement information;
(2) PDU session information;
(3) AI service policy information;
(4) communication policy information;
(5) a DNN;
(6) an S-NSSAI;
(7) a sixth indication, where the sixth indication is used to indicate an AI service release cause; and
(8) a seventh indication, where the seventh indication is used to indicate an AI service release type.

In an embodiment of the present application, the AI resource establishment result includes information about an AI resource node.

In an embodiment of the present application, the AI resource modification result includes updated information about an AI resource node.

In an embodiment of the present application, the network resource release result includes a cause value for release failure.

In an embodiment of the present application, the apparatus further includes:
a fourth sending module, configured to send a third message to a third network element, where the third message is used to request the third network element to determine an AI resource node; and
a fourth receiving module, configured to receive a fourth message sent by the third network element in response to the third message, where the fourth message includes information about an AI resource node.

In an embodiment of the present application, the third message includes at least one of the following: model information, data source information, AI service computational load, and an address of an application server.

In an embodiment of the present application, the information about an AI resource node includes at least one of the following: an IP address of the AI resource node, identifier information of the AI resource node, and an FQDN of the AI resource node.

In an embodiment of the present application, the apparatus further includes:
a fifth sending module, configured to send a fifth message to a fourth network element, where the fifth message is used to request model information from the fourth network element; and
a fifth receiving module, configured to receive a sixth message sent by the fourth network element in response to the fifth message, where the sixth message is used to indicate the model information.

In an embodiment of the present application, the fifth sending module is further configured to: in a case that a first condition is satisfied, send the fifth message to the fourth network element; where
the first condition includes at least one of the following:
(1) the third message does not include model information;
(2) the third message includes a tenth indication, where the tenth indication is used to indicate to obtain model information from the fourth network element; and
(3) the first network element is not capable of obtaining model information.

In an embodiment of the present application, the apparatus further includes:
a selection module, configured to select the fourth network element according to at least one of network identifier information, an AI service identifier, a supported AI service, service area information, and information about a supported model.

In an embodiment of the present application, the apparatus further includes:
a sixth sending module, configured to send a seventh message to a fifth network element, where the seventh message is used to request the fifth network element to determine data source information; and
the first network element receives an eighth message sent by the fifth network element in response to the seventh message, where the eighth message is used to indicate the data source information.

In an embodiment of the present application, the sixth sending module is further configured to: in a case that a second condition is satisfied, send the seventh message to the fifth network element; where
the second condition includes at least one of the following:
(1) the third message does not include data source information;
(2) the third message includes an eleventh indication, where the eleventh indication is used to indicate to obtain data source information from the fifth network element; and
(3) the first network element is not capable of obtaining data source information.

In an embodiment of the present application, the apparatus further includes:
a second selection module, configured to select the fifth network element according to at least one of network identifier information, an AI service identifier, a supported AI service, service area information, and information about a supported model.

In an embodiment of the present application, the apparatus further includes:
a seventh sending module, configured to send a ninth message to a sixth network element, where the ninth message includes at least one of the following: information about an AI resource node, AI service QoS information, and AI service policy information; and
a sixth receiving module, configured to receive a tenth message sent by the sixth network element in response to the ninth message, where the tenth message includes information about an AI resource node.

In an embodiment of the present application, the apparatus further includes:
a seventh receiving module, configured to receive an eleventh message; where
the eleventh message is used to request at least one of the following: modifying a model of an AI service; modifying a data source of an AI service; and modifying an AI resource node providing AI service processing.

In an embodiment of the present application, in a case that the eleventh message is used to request modification of a model of an AI service, the eleventh message includes updated model information.

In an embodiment of the present application, in a case that the eleventh message is used to request modification of a data source of an AI service, the eleventh message includes updated data source information.

In an embodiment of the present application, in a case that the eleventh message is used to request modification of an AI resource node providing AI service processing, the eleventh message includes updated information about an AI resource node.

In an embodiment of the present application, the apparatus further includes:
an eighth sending module, configured to send a twelfth message in response to the eleventh message; where
the twelfth message is used to indicate at least one of the following: a model modification result; a data source modification result; and an AI resource modification result.

In an embodiment of the present application, the apparatus further includes:
a ninth sending module, configured to send a thirteenth message to a seventh network element, where the thirteenth message is used to request modification of a communication resource allocated for an AI service; and
an eighth receiving module, configured to receive a fourteenth message sent by the seventh network element in response to the thirteenth message, where the fourteenth message is used to indicate a communication resource modification result.

In an embodiment of the present application, the apparatus further includes:
a tenth sending module, configured to send a fifteenth message to an eighth network element, where the fifteenth message is used to request release of an association state between a model and an AI service or release of an association state between a model and a terminal; and
a ninth receiving module, configured to receive a sixteenth message sent by the eighth network element in response to the fifteenth message, where the sixteenth message is used to indicate a model release result.

In an embodiment of the present application, the fifteenth message includes at least one of the following: a terminal identifier, AI service information, a model subscription association identifier, a used model identifier, and an address of the eighth network element.

In an embodiment of the present application, the tenth sending module is further configured to: in a case that a third condition is satisfied, send the fifteenth message to the eighth network element; where
the third condition includes at least one of the following: AI service information includes a used model identifier, and the model release request message includes a twelfth indication, where the twelfth indication is used to indicate release of a model associated with an AI service.

In an embodiment of the present application, the apparatus further includes:
an eleventh sending module, configured to send a seventeenth message to a ninth network element, where the seventeenth message is used to request release of an association state between data and an AI service, or release of an association state between data and a terminal; and
a tenth receiving module, configured to receive an eighteenth message sent by the ninth network element in response to the seventeenth message, where the eighteenth message is used to indicate a data source release result.

In an embodiment of the present application, the seventeenth message includes at least one of the following: a terminal identifier, AI service information, data source information, and an address of the ninth network element.

In an embodiment of the present application, the eleventh sending module is further configured to: in a case that a fourth condition is satisfied, send the seventeenth message to the ninth network element; where
the fourth condition includes at least one of the following: AI service information includes a used model identifier, and the data source release request message includes a thirteenth indication, where the thirteenth indication is used to indicate release of a data plane connection.

In an embodiment of the present application, the apparatus further includes:
a twelfth sending module, configured to send a nineteenth message to a tenth network element, where the nineteenth message is used to request release of an AI resource established for an AI service; and
an eleventh receiving module, configured to receive a twentieth message sent by the tenth network element in response to the nineteenth message, where the twentieth message is used to indicate an AI resource release result.

In an embodiment of the present application, the nineteenth message includes at least one of the following: an address of the tenth network element, and AI service information.

In an embodiment of the present application, the twentieth message includes at least one of the following: a fourteenth indication, where the fourteenth indication is used to indicate AI resource release success or AI resource release failure, and a fifteenth indication, where the fifteenth indication is used to indicate a cause value for AI resource release failure.

In an embodiment of the present application, the apparatus further includes:
a thirteenth sending module, configured to send a twenty-first message to an eleventh network element, where the twenty-first message is used to request release of a communication resource allocated for an AI service; and
a twelfth receiving module, configured to receive a twenty-second message sent by the eleventh network element in response to the twenty-first message, where the twenty-second message is used to indicate a communication resource release result.

In an embodiment of the present application, the twenty-first message includes at least one of the following: a terminal identifier, PDU session information, AI service information, network identifier information, an address of a second network element, a release cause, and policy information, where the second network element has a communication management function.

In an embodiment of the present application, the twenty-second message includes at least one of the following: a sixteenth indication, where the sixteenth indication is used to indicate communication resource release success or communication resource release failure, and a seventeenth indication, where the seventeenth indication is used to indicate a cause value for communication resource release failure.

In an embodiment of the present application, the thirteenth sending module is further configured to: in a case that the second message indicates AI resource release success, send the twenty-first message to the eleventh network element.

In an embodiment of the present application, the first message or the second message or the third message or the fourth message or the fifth message or the sixth message or the seventh message or the eighth message or the ninth message or the tenth message or the eleventh message or the twelfth message or the thirteenth message or the fourteenth message or the fifteenth message or the sixteenth message or the seventeenth message or the eighteenth message or the nineteenth message or the twentieth message or the twenty-first message or the twenty-second message is included in at least one of the following: a SIP message, an HTTP message, and a newly added protocol message used to transmit an AI-related message.

The apparatus provided in the embodiments of the present application can implement various processes implemented by the method embodiment of FIG. 3 and achieve the same technical effects. To avoid repetition, details are not repeated here.

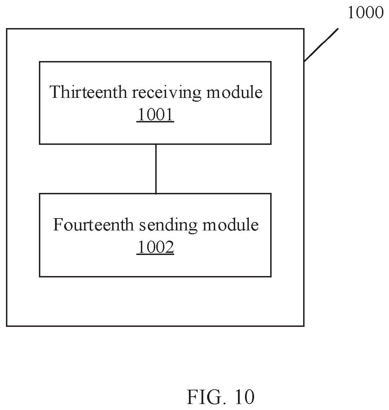

Referring to FIG. 10, an embodiment of the present application provides an AI service processing apparatus applied to a second network element, where the apparatus 1000 includes:
a thirteenth receiving module 1001, configured to receive a first message, where the first message is used to request allocation of a network resource for an AI service; and
a fourteenth sending module 1002, configured to send to a terminal a second message in response to the first message, where the second message includes indication information indicating an address of a first network element, where the first network element is an AI service processing entry network element.

In an embodiment of the present application, the first message includes a third indication, where the third indication is used to indicate a network to establish a dedicated PDU session for an AI service.

In an embodiment of the present application, the apparatus further includes:
a determination module, configured to determine, according to at least one of the third indication, a DNN, and an S-NSSAI, to establish a PDU session for an AI service.

In an embodiment of the present application, the apparatus further includes:
a third selection module, configured to select one first network element according to the third indication or first information; where
the first information includes at least one of the following:
   (1) an area of interest;
   (2) terminal AI subscription information, where the subscription information is related to an AI service;
   (3) network identifier information of a PDU session;
   (4) an AI service identifier;
   (5) a supported AI service;
   (6) a first network element capability;
   (7) a location of a user plane function UPF; and
   (8) a terminal location.

In an embodiment of the present application, the first message or the second message is included in at least one of the following: a SIP message, an HTTP message, and a newly added protocol message, where the newly added protocol message is used to transmit an AI-related message.

The apparatus provided in the embodiments of the present application can implement various processes implemented by the method embodiment of FIG. 4 and achieve the same technical effects. To avoid repetition, details are not repeated here.

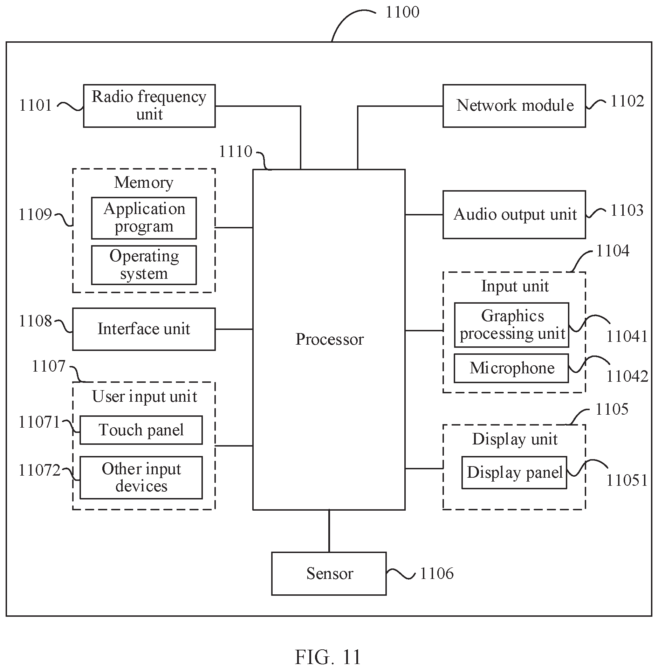

FIG. 11 is a schematic diagram of a hardware structure of a terminal implementing an embodiment of the present application. The terminal 1100 includes but is not limited to at least some components among a radio frequency unit 1101, a network module 1102, an audio output unit 1103, an input unit 1104, a sensor 1105, a display unit 1106, a user input unit 1107, an interface unit 1108, a memory 1109, and a processor 1110.

Those skilled in the art can understand that the terminal 1100 may further include a power supply (such as a battery) for supplying power to various components, and the power supply may be logically connected to the processor 1110 through a power management system, so as to implement functionalities such as charging management, discharging management, and power consumption management through the power management system. The terminal structure shown in FIG. 11 does not constitute a limitation on the terminal, and the terminal may include more or fewer components than shown in the figure, or combine some components, or arrange different components, which will not be repeated here.

It should be understood that in the embodiments of the present application, the input unit 1104 may include a graphics processing unit (Graphics Processing Unit, GPU) 11041 and a microphone 11042, and the graphics processing unit 11041 processes image data of a still picture or video obtained by an image capture device (such as a camera) in a video capture mode or an image capture mode. The display unit 1106 may include a display panel 110111, and the display panel 110111 may be configured in the form of a liquid crystal display, an organic light-emitting diode, or the like. The user input unit 1107 includes at least one of a touch panel 11031 and other input devices 11032. The touch panel 11031 is also referred to as a touch screen. The touch panel 11031 may include two parts: a touch detection device and a touch controller. The other input devices 11032 may include but are not limited to a physical keyboard, function keys (such as a volume control key and a switch key), a trackball, a mouse, and a joystick, which will not be repeated here.

In the embodiments of the present application, after receiving downlink data from a network-side device, the radio frequency unit 1101 may transmit it to the processor 1110 for processing. In addition, the radio frequency unit 1101 may send uplink data to the network-side device. Generally, the radio frequency unit 1101 includes but is not limited to an antenna, an amplifier, a transceiver, a coupler, a low noise amplifier, and a duplexer.

The memory 1109 may be used to store software programs or instructions and various data. The memory 1109 may mainly include a first storage area for storing programs or instructions and a second storage area for storing data, where the first storage area may store an operating system, an application program or instructions required by at least one function (such as a sound playback function or an image playback function), and the like. In addition, the memory 1109 may include a volatile memory or a non-volatile memory, or the memory 1109 may include a non-transitory memory. The non-volatile memory or non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct Rambus random access memory (Direct Rambus RAM, DRRAM). The memory 1109 in the embodiments of the present application includes but is not limited to these and any other suitable types of memories.

The processor 1110 may include one or more processing units. Optionally, the processor 1110 integrates an application processor and a modem processor, where the application processor mainly processes operations involving an operating system, a user interface, an application program, and the like, and the modem processor mainly processes wireless communication signals, such as a baseband processor. It can be understood that the modem processor may alternatively not be integrated into the processor 1110.

The terminal provided in the embodiments of the present application can implement various processes implemented by the method embodiment of FIG. 2 and achieve the same technical effects. To avoid repetition, details are not repeated here.

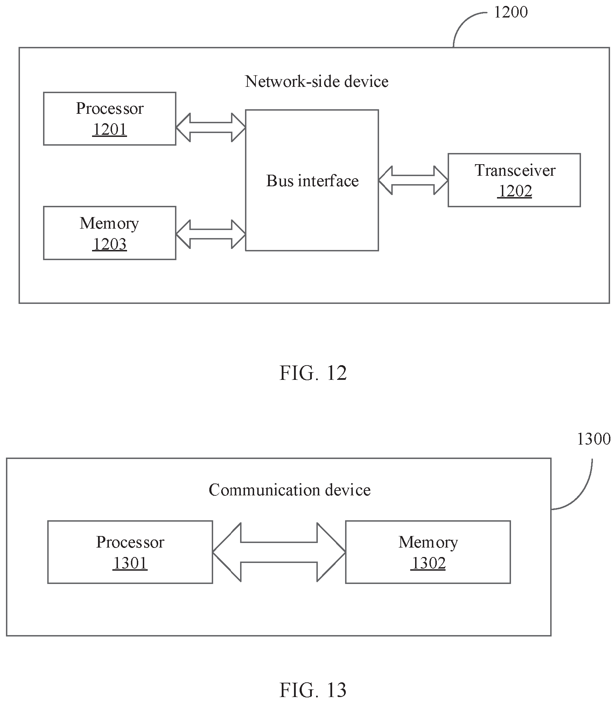

Refer to FIG. 12. FIG. 12 is a structural diagram of a network-side device applied in an embodiment of the present invention, where the network-side device includes a first network element or a second network element.

As shown in FIG. 12, the network-side device 1200 includes: a processor 1201, a transceiver 1202, a memory 1203, and a bus interface, where the processor 1201 may be responsible for managing a bus architecture and general processing. The memory 1203 may store data used by the processor 1201 when performing operations.

In an embodiment of the present invention, the network-side device 1200 further includes: a program stored in the memory 1203 and executable on the processor 1201, where the program, when executed by the processor 1201, implements the steps in the method shown in FIG. 3 or FIG. 4.

In FIG. 12, a bus architecture may include any number of interconnected buses and bridges, specifically linked together by various circuits of one or more processors represented by the processor 1201 and memories represented by the memory 1203. The bus architecture may also link together various other circuits such as peripherals, voltage regulators, and power management circuits, which are well known in the art and therefore will not be further described herein. A bus interface provides an interface. The transceiver 1202 may be multiple elements, that is, including a transmitter and a receiver, providing units for communicating with various other devices over a transmission medium.

Refer to FIG. 13. FIG. 13 is a structural diagram of a communication device applied in an embodiment of the present invention, where the communication device may be a terminal or a network-side device, and the network-side device includes a first network element or a second network element.

As shown in FIG. 13, an embodiment of the present application further provides a communication device 1300, including a processor 1301 and a memory 1302, where the memory 1302 stores a program or instructions executable on the processor 1301. For example, when the communication device 1200 is a terminal, the program or instructions, when executed by the processor 1301, implement various steps of the method embodiment of FIG. 2, and when the communication device 1300 is a network-side device, the program or instructions, when executed by the processor 1301, implement various steps of the method embodiment of FIG. 3 or FIG. 4 and can achieve the same technical effects. To avoid repetition, details are not repeated here.

An embodiment of the present application further provides a readable storage medium, where a program or instructions are stored on the readable storage medium, and the program or instructions, when executed by a processor, implement various processes of the method of FIG. 2 or FIG. 3 or FIG. 4 and the above various embodiments and can achieve the same technical effects. To avoid repetition, details are not repeated here.

The processor is the processor in the terminal or network-side device in the above embodiments. The readable storage medium includes a computer readable storage medium, such as a computer read-only memory ROM, a random access memory RAM, a magnetic disk, or an optical disk. In some examples, the readable storage medium may be a non-transitory readable storage medium.

An embodiment of the present application further provides a chip, where the chip includes a processor and a communication interface, the communication interface is coupled to the processor and the processor is configured to run a program or instructions to implement various processes of the foregoing method embodiment of FIG. 2 or FIG. 3 or FIG. 4 and can achieve the same technical effects. To avoid repetition, details are not repeated here.

It should be understood that the chip mentioned in the embodiments of the present application may also be referred to as a system-level chip, a system chip, a chip system, a system on chip, or the like.

An embodiment of the present application further provides a computer program/program product, where the computer program/program product is stored in a storage medium, and the computer program/program product is executed by at least one processor to implement various processes of the foregoing method embodiment of FIG. 2 or FIG. 3 or FIG. 4 and can achieve the same technical effects. To avoid repetition, details are not repeated here.

An embodiment of the present application further provides a communication system, where the communication system includes a terminal and a network-side device, the terminal is configured to perform various processes of the method embodiment of FIG. 2, and the network-side device is configured to perform various processes of the method embodiment of FIG. 3 or FIG. 4 and can achieve the same technical effects. To avoid repetition, details are not repeated here.

It should be noted that in this specification, the terms "include", "comprise" or any other variants thereof are intended to cover non-exclusive inclusion, so that a process, method, article or apparatus including a series of elements not only includes those elements, but also includes other elements not explicitly listed, or also includes elements inherent to such process, method, article or apparatus. Without more limitations, an element defined by the statement "including one..." does not exclude the existence of another identical element in the process, method, article or apparatus including the element. In addition, it should be noted that the scope of the methods and apparatuses in the embodiments of the present application is not limited to performing functions in the order shown or discussed, and may further include performing functions in a substantially simultaneous manner or in a reverse order according to the functions involved. For example, the described methods may be performed in an order different from the described order, and various steps may also be added, omitted or combined. In addition, features described with reference to some examples may be combined in other examples.

From the above description of the embodiments, those skilled in the art can clearly understand that the methods in the above embodiments can be implemented by means of software plus a necessary general hardware platform, and certainly, can also be implemented by hardware. The computer software product is stored in a storage medium (such as a ROM, a RAM, a magnetic disk or an optical disk) and includes several instructions to cause a terminal or a network-side device to execute the methods described in the embodiments of the present application.

The embodiments of the present application have been described above with reference to the accompanying drawings, but the present application is not limited to the above specific embodiments. The above specific embodiments are merely illustrative rather than restrictive. Many forms of embodiments can be made by those of ordinary skill in the art under the enlightenment of the present application without departing from the purpose of the present application and the scope protected by the claims, all of which fall within the protection of the present application.

## Claims

1. An AI service processing method, comprising:
sending, by a terminal, a first message; and
receiving, by the terminal, a second message, wherein the second message is used to respond to the first message; wherein
the first message is used to request allocation of a network resource for an artificial intelligence AI service, and the second message comprises indication information indicating an address of a first network element, wherein the first network element is an AI service processing entry network element;
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

2. The method according to claim 1, wherein the sending, by a terminal, a first message, wherein the first message is used to request allocation of a network resource for an AI service, comprises:
sending, by the terminal, the first message based on a UE route selection policy URSP rule, wherein the first message is used to request allocation of a network resource for an AI service; wherein
the URSP rule comprises a first indication, and the first indication is used for the terminal to identify AI service traffic and route the AI service traffic to an existing PDU session or establish a new PDU session.

3. The method according to claim 2, wherein the first indication comprises at least one of the following: a data network name DNN dedicated to an AI service, single network slice selection assistance information S-NSSAI dedicated to an AI service, an AI service identifier, an AI operating system identifier, and an AI application identifier.

4. The method according to claim 2, before the sending, by the terminal, the first message based on a URSP rule, further comprising:
sending, by the terminal, a second indication, wherein the second indication is used to indicate at least one of the following: the terminal supports AI processing, the terminal supports an AI service, and the terminal supports a policy for an AI service; and
receiving, by the terminal, the URSP rule.

5. The method according to claim 4, wherein the second indication is comprised in a UE policy classmark or a protocol configuration option information element PCO IE or an extended protocol configuration option information element ePCO IE.

6. The method according to claim 1, wherein in a case that the first message is used to request allocation of a network resource for an AI service, the first message comprises a third indication, wherein the third indication is used to indicate a network to establish a dedicated PDU session for the AI service;
or
in a case that the first message is used to request allocation of an AI resource for an AI service, the first message comprises at least one of the following:
AI service requirement information;
a DNN;
an S-NSSAI;
a fourth indication, wherein the fourth indication is used to indicate a session type;
PDU session information;
AI service policy information; and
an address of an application server;
or
in a case that the first message is used to request modification of an AI resource for an AI service, the first message comprises at least one of the following:
AI service requirement information;
PDU session information;
a fifth indication, wherein the fifth indication is used to indicate that completion of the AI service requires application server collaboration; and
an address of an application server;
or
the first message is used to request release of a network resource allocated for an AI service, and the first message comprises at least one of the following:
AI service requirement information;
PDU session information;
AI service policy information;
communication policy information;
a DNN;
an S-NSSAI;
a sixth indication, wherein the sixth indication is used to indicate an AI service release cause; and
a seventh indication, wherein the seventh indication is used to indicate an AI service release type.

7. The method according to claim 6, wherein the AI service requirement information comprises at least one of the following:
an AI service identifier;
an AI service type;
an AI service quality of experience QoE requirement;
AI service quality of service QoS information;
model-related parameters;
an eighth indication, wherein the eighth indication is used to indicate whether intra-network data is needed; and
a ninth indication, wherein the ninth indication is used to indicate whether a data source is needed.

8. The method according to claim 6, wherein that the third indication is used to indicate a network to establish a dedicated PDU session for an AI service comprises at least one of the following:
the third indication is used to indicate that the terminal requests the address of the first network element, and the third indication is comprised in an ePCO IE; and
the third indication is used to indicate that the terminal supports AI service processing, and the third indication is comprised in a UE capability information element.

9. The method according to claim 1, wherein the indication information indicating the address of the first network element comprises at least one of the following: the address of the first network element, and an address of an application server;
or
the AI resource establishment result comprises information about an AI resource node;
or
the AI resource modification result comprises updated information about an AI resource node;
or
the network resource release result comprises a cause value for release failure.

10. The method according to claim 9, wherein the information about an AI resource node comprises at least one of the following: an IP address of the AI resource node, identifier information of the AI resource node, and a fully qualified domain name FQDN of the AI resource node.

11. The method according to claim 1, wherein after the receiving, by the terminal, a second message used to indicate an AI resource establishment result, the method further comprises:
sending, by the terminal, AI service data to an AI resource node corresponding to the information about an AI resource node via a PDU session.

12. The method according to claim 1, wherein the first message or the second message is comprised in at least one of the following: a session initialization protocol SIP message, a hypertext transfer protocol HTTP message, and an newly added protocol message, wherein the newly added protocol message is used to transmit an AI-related message.

13. An AI service processing method, comprising:
receiving, by a first network element, a first message; and
sending, by the first network element, a second message, wherein the second message is used to respond to the first message; wherein
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

14. The method according to claim 13, wherein
in a case that the first message is used to request allocation of an AI resource for an AI service, the first message comprises at least one of the following:
AI service requirement information;
a DNN;
an S-NSSAI;
a fourth indication, wherein the fourth indication is used to indicate a session type;
PDU session information;
AI service policy information; and
an address of an application server;
or
in a case that the first message is used to request modification of an AI resource for an AI service, the first message comprises at least one of the following:
AI service requirement information;
PDU session information;
a fifth indication, wherein the fifth indication is used to indicate that completion of an AI service requires application server collaboration; and
an address of an application server;
or
the first message is used to request release of a network resource allocated for an AI service, and the first message comprises at least one of the following:
AI service requirement information;
PDU session information;
AI service policy information;
communication policy information;
a DNN;
an S-NSSAI;
a sixth indication, wherein the sixth indication is used to indicate an AI service release cause; and
a seventh indication, wherein the seventh indication is used to indicate an AI service release type;
or
in a case that the second message is used to indicate an AI resource establishment result, the second message comprises information about an AI resource node;
or
in a case that the second message is used to indicate an AI resource modification result, the second message comprises updated information about an AI resource node;
or
in a case that the second message is used to indicate failure of release of a network resource or AI resource, the second message comprises a cause value for release failure.

15. The method according to claim 13, wherein after the receiving, by a first network element, a first message used to request allocation of an AI resource, and before the sending, by the first network element, a second message used to indicate an AI resource establishment result, the method further comprises:
sending, by the first network element, a third message to a third network element, wherein the third message is used to request the third network element to determine an AI resource node; and
receiving, by the first network element, a fourth message sent by the third network element in response to the third message, wherein the fourth message comprises information about an AI resource node.

16. The method according to claim 15, wherein the third message comprises at least one of the following: model information, data source information, AI service computational load, and an address of an application server.

17. The method according to claim 15, wherein the information about an AI resource node comprises at least one of the following: an IP address of the AI resource node, identifier information of the AI resource node, and an FQDN of the AI resource node.

18. The method according to claim 15, wherein before the sending, by the first network element, a third message to a third network element, the method further comprises:
sending, by the first network element, a fifth message to a fourth network element, wherein the fifth message is used to request model information from the fourth network element; and
receiving, by the first network element, a sixth message sent by the fourth network element in response to the fifth message, wherein the sixth message is used to indicate the model information.

19. The method according to claim 18, wherein the sending, by the first network element, a fifth message to a fourth network element comprises:
in a case that a first condition is satisfied, sending, by the first network element, the fifth message to the fourth network element; wherein
the first condition comprises at least one of the following:
the third message does not comprise model information;
the third message comprises an eleventh indication, wherein the eleventh indication is used to indicate to obtain model information from the fourth network element; and
the first network element is not capable of obtaining model information.

20. The method according to claim 18, wherein before the sending, by the first network element, a fifth message to a fourth network element, the method further comprises:
selecting, by the first network element, the fourth network element according to at least one of a DNN, an S-NSSAI, an AI service identifier, a supported AI service, service area information, and information about a supported model.

21. The method according to claim 15, wherein before the sending, by the first network element, a third message to a third network element, the method further comprises:
sending, by the first network element, a seventh message to a fifth network element, wherein the seventh message is used to request the fifth network element to determine data source information; and
receiving, by the first network element, an eighth message sent by the fifth network element in response to the seventh message, wherein the eighth message is used to indicate the data source information.

22. The method according to claim 21, wherein the sending, by the first network element, a seventh message to a fifth network element comprises:
in a case that a second condition is satisfied, sending, by the first network element, the seventh message to the fifth network element; wherein
the second condition comprises at least one of the following:
the third message does not comprise data source information;
the third message comprises an eleventh indication, wherein the eleventh indication is used to indicate to obtain data source information from the fifth network element; and
the first network element is not capable of obtaining data source information.

23. The method according to claim 21, wherein before the sending, by the first network element, a seventh message to a fifth network element, the method further comprises:
selecting, by the first network element, the fifth network element according to at least one of a DNN, an S-NSSAI, an AI service identifier, a supported AI service, service area information, and information about a supported model.

24. The method according to claim 15, wherein after the receiving, by the first network element, a fourth message sent by the third network element in response to the third message, the method further comprises:
sending, by the first network element, a ninth message to a sixth network element, wherein the ninth message comprises at least one of the following: information about an AI resource node, AI service QoS information, and AI service policy information; and
receiving, by the first network element, a tenth message sent by the sixth network element in response to the ninth message, wherein the tenth message comprises information about an AI resource node.

25. The method according to claim 13, wherein before or after or in a case of the receiving, by a first network element, a first message used to request modification of an AI resource, the method further comprises:
receiving, by the first network element, an eleventh message; wherein
the eleventh message is used to request modification of a model of an AI service;
the eleventh message is used to request modification of a data source of an AI service; or
the eleventh message is used to request modification of an AI resource node providing AI service processing.

26. The method according to claim 25, wherein in a case that the eleventh message is used to request modification of a model of an AI service, the eleventh message comprises updated model information,
in a case that the eleventh message is used to request modification of a data source of an AI service, the eleventh message comprises updated data source information, or
in a case that the eleventh message is used to request modification of an AI resource node providing AI service processing, the eleventh message comprises updated information about an AI resource node.

27. The method according to claim 25, wherein before or after or in a case of the sending, by the first network element, a second message used to indicate an AI resource modification result, the method further comprises:
sending, by the first network element, a twelfth message in response to the eleventh message; wherein
the twelfth message is used to indicate a model modification result;
the twelfth message is used to indicate a data source modification result; or
the twelfth message is used to indicate an AI resource modification result.

28. The method according to claim 13, wherein after the receiving, by a first network element, a first message used to request modification of an AI resource, and before the sending, by the first network element, a second message used to indicate an AI resource modification result, the method further comprises:
sending, by the first network element, a thirteenth message to a seventh network element, wherein the thirteenth message is used to request modification of a communication resource allocated for an AI service; and
receiving, by the first network element, a fourteenth message sent by the seventh network element in response to the thirteenth message, wherein the fourteenth message is used to indicate a communication resource modification result.

29. The method according to claim 13, wherein after the receiving, by a first network element, a first message used to request release of a network resource or AI resource, the method further comprises:
sending, by the first network element, a fifteenth message to an eighth network element, wherein the fifteenth message is used to request release of an association state between a model and an AI service or release of an association state between a model and a terminal; and
receiving, by the first network element, a sixteenth message sent by the eighth network element in response to the fifteenth message, wherein the sixteenth message is used to indicate a model release result.

30. The method according to claim 29, wherein the fifteenth message comprises at least one of the following: a terminal identifier, AI service information, a model subscription association identifier, a used model identifier, and an address of the eighth network element.

31. The method according to claim 29, wherein the sending, by the first network element, a fifteenth message to an eighth network element comprises:
in a case that a third condition is satisfied, sending, by the first network element, the fifteenth message to the eighth network element; wherein
the third condition comprises at least one of the following: AI service information comprises a used model identifier, and the model release request message comprises a thirteenth indication, wherein the thirteenth indication is used to indicate release of a model associated with an AI service.

32. The method according to claim 13, wherein after the receiving, by a first network element, a first message used to request release of a network resource or AI resource, the method further comprises:
sending, by the first network element, a seventeenth message to a ninth network element, wherein the seventeenth message is used to request release of an association state between data and an AI service, or release of an association state between data and a terminal; and
receiving, by the first network element, an eighteenth message sent by the ninth network element in response to the seventeenth message, wherein the eighteenth message is used to indicate a data source release result.

33. The method according to claim 32, wherein the seventeenth message comprises at least one of the following: a terminal identifier, AI service information, data source information, and an address of the ninth network element.

34. The method according to claim 32, wherein the sending, by the first network element, a seventeenth message to a ninth network element comprises:
in a case that a fourth condition is satisfied, sending, by the first network element, the seventeenth message to the ninth network element; wherein
the fourth condition comprises at least one of the following: AI service information comprises a used model identifier, and the data source release request message comprises a fourteenth indication, wherein the fourteenth indication is used to indicate release of a data plane connection.

35. The method according to claim 13, wherein after the receiving, by the first network element, the request for release of a network resource or AI resource, the method further comprises:
sending, by the first network element, a nineteenth message to a tenth network element, wherein the nineteenth message is used to request release of an AI resource established for an AI service; and
receiving, by the first network element, a twentieth message sent by the tenth network element in response to the nineteenth message, wherein the twentieth message is used to indicate an AI resource release result.

36. The method according to claim 35, wherein the nineteenth message comprises at least one of the following: an address of the tenth network element, and AI service information; or
the twentieth message comprises at least one of the following: a fifteenth indication, wherein the fifteenth indication is used to indicate AI resource release success or AI resource release failure, and a sixteenth indication, wherein the sixteenth indication is used to indicate a cause value for AI resource release failure.

37. The method according to claim 13, wherein after the sending, by the first network element, a second message used to indicate a network resource release result, the method further comprises:
sending, by the first network element, a twenty-first message to an eleventh network element, wherein the twenty-first message is used to request release of a communication resource allocated for an AI service; and
receiving, by the first network element, a twenty-second message sent by the eleventh network element in response to the twenty-first message, wherein the twenty-second message is used to indicate a communication resource release result.

38. The method according to claim 37, wherein the twenty-first message comprises at least one of the following: a terminal identifier, PDU session information, AI service information, network identifier information, an address of a second network element, a release cause, and policy information, wherein the second network element has a communication management function; or
the twenty-second message comprises at least one of the following: a seventeenth indication, wherein the seventeenth indication is used to indicate communication resource release success or communication resource release failure, and an eighteenth indication, wherein the eighteenth indication is used to indicate a cause value for communication resource release failure.

39. The method according to claim 37, wherein the sending, by the first network element, a twenty-first message to an eleventh network element comprises:
in a case that the second message indicates AI resource release success, sending, by the first network element, the twenty-first message to the eleventh network element.

40. The method according to any one of claims 13 to 39, wherein the first message or the second message or the third message or the fourth message or the fifth message or the sixth message or the seventh message or the eighth message or the ninth message or the tenth message or the eleventh message or the twelfth message or the thirteenth message or the fourteenth message or the fifteenth message or the sixteenth message or the seventeenth message or the eighteenth message or the nineteenth message or the twentieth message or the twenty-first message is comprised in at least one of the following: a SIP message, an HTTP message, and a newly added protocol message, wherein the newly added protocol message is used to transmit an AI-related message.

41. An AI service processing method, comprising:
receiving, by a second network element, a first message, wherein the first message is used to request allocation of a network resource for an AI service; and
sending, by the second network element to a terminal, a second message in response to the first message, wherein the second message comprises indication information indicating an address of a first network element, wherein the first network element is an AI service processing entry network element.

42. The method according to claim 41, wherein the first message comprises a third indication, wherein the third indication is used to indicate a network to establish a dedicated PDU session for an AI service.

43. The method according to claim 42, wherein after the receiving, by a second network element, a first message, and before the sending, by the second network element, a second message to a terminal, the method further comprises:
determining, by the second network element, to establish a PDU session for an AI service according to at least one of the third indication, a DNN, and an S-NSSAI.

44. The method according to claim 42, wherein before the sending, by the second network element to a terminal, a second message in response to the first message, the method further comprises:
selecting, by the second network element, one first network element according to the third indication or first information; wherein
the first information comprises at least one of the following:
an area of interest;
terminal AI subscription information, wherein the subscription information is related to an AI service;
a DNN of a PDU session;
an S-NSSAI of a PDU session;
an AI service identifier;
a supported AI service;
a first network element capability;
a location of a user plane function UPF; and
a terminal location.

45. An AI service processing apparatus, comprising:
a first sending module, configured to send a first message; and
a first receiving module, configured to receive a second message, wherein the second message is used to respond to the first message; wherein
the first message is used to request allocation of a network resource for an AI service, and the second message comprises indication information indicating an address of a first network element, wherein the first network element is an AI service processing entry network element;
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

46. An AI service processing apparatus, comprising:
a third receiving module, configured to receive a first message; and
a third sending module, configured to send a second message, wherein the second message is used to respond to the first message; wherein
the first message is used to request allocation of an AI resource for an AI service, and the second message is used to indicate an AI resource establishment result;
the first message is used to request modification of an AI resource for an AI service, and the second message is used to indicate an AI resource modification result; or
the first message is used to request release of a network resource allocated for an AI service, and the second message is used to indicate a network resource release result.

47. An AI service processing apparatus, comprising:
a thirteenth receiving module, configured to receive a first message, wherein the first message is used to request allocation of a network resource for an AI service; and
a fourteenth sending module, configured to send to a terminal a second message in response to the first message, wherein the second message comprises indication information indicating an address of a first network element, wherein the first network element is an AI service processing entry network element.

48. A terminal, comprising a processor, a memory, and a program or instructions stored on the memory and executable on the processor, wherein the program or instructions, when executed by the processor, implement the steps of the method according to any one of claims 1 to 12.

49. A network-side device, comprising a processor, a memory, and a program or instructions stored on the memory and executable on the processor, wherein the program or instructions, when executed by the processor, implement the steps of the method according to any one of claims 13 to 44.

50. A readable storage medium, wherein a program or instructions are stored on the readable storage medium, and the program or instructions, when executed by a processor of a terminal, implement the steps of the method according to any one of claims 1 to 44.
